(19) Europäisches Patentamt
European Patent Office
Office européen des brevets

(11) **EP 4 130 498 B1**

(12) **EUROPEAN PATENT SPECIFICATION**

(45) Date of publication and mention
of the grant of the patent:
**06.03.2024 Bulletin 2024/10**

(21) Application number: **22184130.7**

(22) Date of filing: **11.07.2022**

(51) International Patent Classification (IPC):
**F16C 17/02** (2006.01) **F16C 33/10** (2006.01)

(52) Cooperative Patent Classification (CPC):
**F16C 17/02; F16C 33/10;** F16C 2202/04;
F16C 2223/00; F16C 2233/00; Y02T 10/86

(54) **SLIDING MEMBER AND METHOD FOR DRIVING SLIDING MEMBER**

GLEITELEMENT UND VERFAHREN ZUM ANTRIEB DES GLEITELEMENTS

ÉLÉMENT COULISSANT ET PROCÉDÉ D'ENTRAÎNEMENT DE L'ÉLÉMENT COULISSANT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **02.08.2021 JP 2021127009**

(43) Date of publication of application:
**08.02.2023 Bulletin 2023/06**

(73) Proprietor: **Kabushiki Kaisha Kobe Seiko Sho
(Kobe Steel, Ltd.)
Kobe-shi, Hyogo 651-8585 (JP)**

(72) Inventors:
• **MATSUDA, Mariko
Hyogo, 676-8670 (JP)**
• **TAKAGAWA, Yusaku
Hyogo, 651-2271 (JP)**
• **OKITA, Keisuke
Hyogo, 651-2271 (JP)**
• **SHIRAFUJI, Tsukasa
Hyogo, 676-8670 (JP)**
• **UEDA, Takashi
Hyogo, 676-8670 (JP)**

(74) Representative: **Müller-Boré & Partner
Patentanwälte PartG mbB
Friedenheimer Brücke 21
80639 München (DE)**

(56) References cited:
**JP-A- 2017 161 003**

**Description**

BACKGROUND OF THE INVENTION

Field of Invention

The present invention relates to a sliding member and a method for driving a sliding member.

Description of the Related Art

A sliding member for a ship includes: for example, a shaft member such as a crankshaft, an intermediate shaft, a propulsion shaft, or the like; and a bearing member such as a slide bearing or the like which slidably supports the shaft member. Furthermore, lubricating oil is supplied to a gap between the shaft member and the bearing member. The lubricating oil forms an oil film between the shaft member and the bearing member to inhibit frictional resistance between these members.

In a case in which a thickness of the oil film relative to surface roughness of a sliding face is sufficient (in a case of a fluid lubrication state), a main factor of the frictional resistance is a viscosity of the oil film, and thus low frictional resistance tends to be maintained. On the other hand, in a case in which the thickness of the oil film relative to the surface roughness of the sliding face is insufficient, not only the viscosity of the oil film but also a solid contact between the shaft member and the bearing member may become a factor of the frictional resistance, and thus the frictional resistance is likely to increase. Furthermore, in the case in which the thickness of the oil film is insufficient, seizure is likely to occur on the sliding face. Therefore, by forming a favorable oil film, a friction loss and seizure on the sliding face can be effectively inhibited.

As a technique for inhibiting the friction loss of the sliding member, for example, Patent Document 1 discloses a crank lubrication system for reducing a friction loss of a crankshaft. As a technique for inhibiting the friction loss and the seizure of the sliding member, Patent Document 2 discloses a simple processing method of a rotary shaft having a lubricating oil-retaining function. Patent document 3 discloses a sliding mechanism having excellent frictional wear characteristics by specifying the surface roughness of the sliding surface by an evaluation index which greatly influences the frictional wear characteristics. This document further discloses a method of manufacturing a sliding member used in this sliding mechanism.

Prior Art Documents

Patent Documents

Patent Document 1: Japanese Unexamined Patent Application, Publication No. H8-121485
Patent Document 2: Japanese Unexamined Patent Application, Publication No. H7-116958
Patent Document 3: JP 2017 161003 A

SUMMARY OF THE INVENTION

However, in the crank lubrication system disclosed in Patent Document 1, a temperature of the lubricating oil is likely to rise owing to a high degree of surface roughness of a crankpin, and thus there may be a possibility that the seizure cannot be sufficiently inhibited.

In producing a large sliding member for a ship, it may be difficult to realize sufficient dimensional accuracy only by mechanical processing. Particularly in a case of a sliding member having a crankshaft for a ship, a crankpin is eccentric to a journal, and thus the dimensional accuracy of the sliding face after the mechanical processing is likely to be insufficient. Therefore, the large sliding member for a ship tends to require manual polishing of the sliding face of the shaft member as finish processing. Meanwhile, the processing method disclosed in Patent Document 2 requires roll burnishing as finish processing, and thus there may be a possibility that the processing method cannot be applied to the large sliding member for a ship.

The present invention was made in view of the foregoing circumstances, and an object of the present invention is to provide a sliding member which enables inhibition of a friction loss and seizure between a shaft member and a bearing member.

A sliding member according to one aspect of the present invention made to solve the aforementioned problems includes: a shaft member having a shaft diameter D of greater than or equal to 0.18 m; a bearing member which slidably supports an outer peripheral face of the shaft member; and a lubricating oil which is supplied to a gap between the outer peripheral face of the shaft member and an inner peripheral face of the bearing member and forms an oil film in the gap, wherein an arithmetic mean roughness $Ra_1$ of the outer peripheral face of the shaft member is less than or equal to 0.23 $\mu$m, and a protruding peak height $Rpk_1$ of the outer peripheral face of the shaft member is less than or equal to 0.19 $\mu$m, in a case in which a width of the inner peripheral face of the bearing member in an axial direction is denoted by L [m], a width-diameter ratio calculated as L/D is less than 1, and a parameter $C_n$ calculated according to the following formula 1, which represents a state of the oil film, is greater than or equal to a reference value $\gamma(\varepsilon_1)$ calculated based on the following formula 2.

$$C_n = \alpha \frac{\eta NDL^3}{4Wc^2} \qquad \cdots 1$$

$$\gamma(\varepsilon) = \frac{3\left(1 - \varepsilon^2\right)^2}{\pi\varepsilon \sqrt{16\varepsilon^2 + \pi^2\left(1 - \varepsilon^2\right)}} \qquad \cdots 2$$

In the above formula 1, $\alpha$ represents a contact rate between the shaft member and the bearing member, $\eta$ represents a viscosity [Pa·sec] of the lubricating oil, N represents a rotation speed [rps] of the shaft member, W represents a maximum load [N] applied from the outer peripheral face of the shaft member to the inner peripheral face of the bearing member, and c represents a radius gap [m] between the shaft member and the bearing member; in the above formula 2, $\gamma(\varepsilon)$ represents a roughness parameter of the outer peripheral face of the shaft member and the inner peripheral face of the bearing member, the roughness parameter being represented as a function of an eccentricity $\varepsilon$; and $\varepsilon_1$ represents a value calculated according to the following formula 3 in a case in which an arithmetic mean roughness of the inner peripheral face of the bearing member is denoted by $Ra_2$ [$\mu$m] and a value of a minimum oil film parameter at which the oil film maintains a fluid lubrication state is denoted by $\Lambda_{lim}$.

$$\varepsilon_1 = 1 - \frac{\Lambda_{lim} \sqrt{Ra_1^2 + Ra_2^2}}{c} \qquad \cdots 3$$

Effects of the Invention

The sliding member according to the one aspect of the present invention enables inhibition of the friction loss and the seizure between the shaft member and the bearing member.

BRIEF DESCRIPTION OF THE DRAWINGS

FIG. 1 is a schematic cross-sectional view illustrating a section perpendicular to a central axis of a shaft member in a sliding member according to one embodiment of the present invention.
FIG. 2 is a flowchart illustrating a method for driving a sliding member according to an other embodiment of the present invention.
FIG. 3 is a graph showing a relationship between an arithmetic mean roughness of the shaft member and a rotation speed of the shaft member at a time of occurrence of seizure.
FIG. 4 is a graph showing a relationship between a protruding peak height of the shaft member and the rotation speed of the shaft member at the time of occurrence of the seizure.
FIG. 5 is a graph showing a relationship between the arithmetic mean roughness of the shaft member and $C_n/\gamma(\varepsilon_1)$ at the time of occurrence of the seizure.
FIG. 6 is a graph showing a relationship between a grit number of sandpaper with which the shaft member was polished, and the arithmetic mean roughness of the shaft member.

FIG. 7 is a graph showing a relationship between the grit number of the sandpaper with which the shaft member was polished, and the protruding peak height of the shaft member.

FIG. 8 is a graph showing a relationship between a hardness ratio of the shaft member to a bearing member, and a difference in arithmetic mean roughness between the bearing member and the shaft member after a sliding test.

FIG. 9 is a graph showing a relationship between the hardness ratio of the shaft member to the bearing member, and a difference in protruding peak height between the bearing member and the shaft member after the sliding test.

## DESCRIPTION OF THE PREFERRED EMBODIMENTS

Description of Embodiments of the Present Invention

Firstly, embodiments of the present invention are listed and described.

A sliding member according to one aspect of the present invention made to solve the aforementioned problems includes: a shaft member having a shaft diameter D of greater than or equal to 0.18 m; a bearing member which slidably supports an outer peripheral face of the shaft member; and a lubricating oil which is supplied to a gap between the outer peripheral face of the shaft member and an inner peripheral face of the bearing member and forms an oil film in the gap, wherein an arithmetic mean roughness $Ra_1$ of the outer peripheral face of the shaft member is less than or equal to 0.23 $\mu$m, and a protruding peak height $Rpk_1$ of the outer peripheral face of the shaft member is less than or equal to 0.19 $\mu$m, in a case in which a width of the inner peripheral face of the bearing member in an axial direction is denoted by L [m], a width-diameter ratio calculated as L/D is less than 1, and a parameter $C_n$ calculated according to the following formula 1, which represents a state of the oil film, is greater than or equal to a reference value $\gamma(\varepsilon_1)$ calculated based on the following formula 2.

$$C_n = \alpha \frac{\eta NDL^3}{4Wc^2} \qquad \cdots 1$$

$$\gamma(\varepsilon) = \frac{3\left(1 - \varepsilon^2\right)^2}{\pi\varepsilon\sqrt{16\varepsilon^2 + \pi^2\left(1 - \varepsilon^2\right)}} \qquad \cdots 2$$

In the above formula 1, $\alpha$ represents a contact rate between the shaft member and the bearing member, $\eta$ represents a viscosity [Pa·sec] of the lubricating oil, N represents a rotation speed [rps] of the shaft member, W represents a maximum load [N] applied from the outer peripheral face of the shaft member to the inner peripheral face of the bearing member, and c represents a radius gap [m] between the shaft member and the bearing member; in the above formula 2, $\gamma(\varepsilon)$ represents a roughness parameter of the outer peripheral face of the shaft member and the inner peripheral face of the bearing member, the roughness parameter being represented as a function of an eccentricity $\varepsilon$; and $\varepsilon_1$ represents a value calculated according to the following formula 3 in a case in which an arithmetic mean roughness of the inner peripheral face of the bearing member is denoted by $Ra_2$ [$\mu$m] and a value of a minimum oil film parameter at which the oil film maintains a fluid lubrication state is denoted by $\Lambda_{lim}$.

$$\varepsilon_1 = 1 - \frac{\Lambda_{lim}\sqrt{Ra_1^2 + Ra_2^2}}{c} \qquad \cdots 3$$

The sliding member enables inhibition of a friction loss and seizure between the shaft member and the bearing member for the following reasons. In general, a condition under which the oil film between the shaft member and the bearing member can maintain the fluid lubrication state is represented by the following formula 5 by using a Dubois-Ocvirk approximate expression in a case in which the width-diameter ratio is less than 1. In a sliding member including a shaft member having a large diameter, it is difficult to increase the dimensional accuracy, and thus the contact rate between the shaft member and the bearing member is less than 1. Furthermore, it is typical to set a safety factor in design of a machine structure. Thus, in the sliding member, the oil film easily maintains the fluid lubrication state owing

to the parameter $C_n$, which is obtained by multiplying the left side of the following formula 5 by the contact rate $\alpha$ (< 1) between the shaft member and the bearing member, being greater than or equal to the reference value $\gamma(\varepsilon_1)$, which is obtained by multiplying the right side of the following formula 5 by the safety factor of 3. Furthermore, in the sliding member, since the arithmetic mean roughness $Ra_1$ and the protruding peak height $Rpk_1$ of the shaft member are controlled to be less than or equal to certain values, the reference value $\gamma(\varepsilon_1)$ can be reduced. Thus, for example, even in a case in which the maximum load W is high, the parameter $C_n$ tends to be greater than or equal to the reference value $\gamma(\varepsilon_1)$; therefore, the oil film easily maintains the fluid lubrication state. Furthermore, even in a case in which the viscosity $\eta$, the rotation speed N, the width L, and the shaft diameter D are controlled to be small, the oil film likewise easily maintains the fluid lubrication state. Accordingly, the sliding member enables inhibition of the friction loss and the seizure.

$$\frac{\eta N D L^3}{4 W c^2} \geqq \frac{\left(1 - \varepsilon_1{}^2\right)^2}{\pi \varepsilon_1 \sqrt{16 \varepsilon_1{}^2 + \pi^2 \left(1 - \varepsilon_1{}^2\right)}} \quad \cdots \quad 5$$

Moreover, a friction coefficient $\mu$ between the shaft member and the bearing member under the condition under which the oil film is in the fluid lubrication state is represented by the following formula 6. Referring to the following formula 6, the friction coefficient $\mu$ is decreased by reducing the viscosity $\eta$, the rotation speed N, the width L, and the shaft diameter D. As described above, in the sliding member, since the viscosity $\eta$, the rotation speed N, the width L, and the shaft diameter D are easily controlled to be small, the friction loss under the condition under which the oil film is in the fluid lubrication state is easily reduced.

$$\mu = \frac{\eta N \pi^2 D^2 L}{W c \sqrt{1 - \varepsilon_1{}^2}} \quad \cdots \quad 6$$

It is preferred that the outer peripheral face of the shaft member and the inner peripheral face of the bearing member differ in hardness, and that with regard to a peripheral face having a higher hardness, the peripheral face being one of the outer peripheral face of the shaft member and the inner peripheral face of the bearing member, in a case in which an arithmetic mean roughness thereof is denoted by $Ra_h$ [$\mu m$], $Ra_1 = Ra_2 = Ra_h$ is satisfied in the above formula 3. In a case in which the outer peripheral face of the shaft member is continuously in contact with the inner peripheral face of the bearing member, microscopic projections on the surface having the higher hardness of these peripheral faces tend to be maintained. In contrast, it is considered that when a surface having the lower hardness of these peripheral faces is polished with the surface having the higher hardness thereof, a surface roughness of the surface having the lower hardness approaches that of the surface having the higher hardness. Therefore, with regard to the peripheral face having the higher hardness, the peripheral face being one of the outer peripheral face of the shaft member and the inner peripheral face of the bearing member, by using the arithmetic mean roughness $Ra_h$ thereof such that $Ra_1 = Ra_2 = Ra_h$ is satisfied in the above formula 3, the reference value $\gamma(\varepsilon_1)$ can be calculated more easily.

The contact rate $\alpha$ is preferably greater than or equal to 0.6. In a sliding member including a shaft member having a large diameter, it is difficult to sufficiently increase the contact rate between the shaft member and the bearing member only by mechanical processing, and the contact rate is increased by manually polishing the outer peripheral face of the shaft member as finish processing. By thus increasing the contact rate $\alpha$, the outer peripheral face of the shaft member tends to be uniformly in contact with the inner peripheral face of the bearing member. As a result, the maximum load W is reduced, whereby the fluid lubrication state is easily maintained.

The parameter $C_n$ is preferably less than a value $\gamma(\varepsilon_2)$ calculated based on the above formula 2 by using an eccentricity $\varepsilon_2$ calculated according to the following formula 4. Thus, the parameter $C_n$ being less than $\gamma(\varepsilon_2)$ enables sufficient inhibition of the friction loss between the shaft member and the bearing member.

$$\varepsilon_2 = 1 - \frac{\sqrt{0.32} \, \Lambda_{\lim}}{c} \quad \cdots \quad 4$$

An other aspect of the present invention is a method for driving a sliding member including: a shaft member having a shaft diameter D of greater than or equal to 0.18 m; a bearing member which slidably supports an outer peripheral face of the shaft member; and a lubricating oil which is supplied to a gap between the outer peripheral face of the shaft member and an inner peripheral face of the bearing member and forms an oil film in the gap, the method including: a driving step of driving by using the sliding member to rotate the shaft member, wherein an arithmetic mean roughness $Ra_1$ of the outer peripheral face of the shaft member is less than or equal to 0.23 $\mu$m, and a protruding peak height $Rpk_1$ of the outer peripheral face of the shaft member is less than or equal to 0.19 $\mu$m, in a case in which a width of the inner peripheral face of the bearing member in an axial direction is denoted by L [m], a width-diameter ratio calculated as L/D is less than 1, and during steady driving in the driving step, a parameter $C_n$ calculated according to the above formula 1, which represents a state of the oil film, is controlled to be greater than or equal to a reference value $\gamma(\varepsilon_1)$ calculated based on the above formula 2.

Since the parameter $C_n$ is controlled to be greater than or equal to the reference value $\gamma(\varepsilon_1)$ during steady driving in the driving step, the method for driving a sliding member enables inhibition of a friction loss and seizure between the shaft member and the bearing member.

It is to be noted that in the present invention, the "shaft diameter" means a diameter of the outer peripheral face of the shaft member, the "arithmetic mean roughness" means a value measured according to JIS-B0601 (2013) at a low-frequency cut-off value ($\lambda$c) of 2.5 mm and a high-frequency cut-off value ($\lambda$s) of 0.8 $\mu$m, the "protruding peak height" means a value measured according to JIS-B0671-2 (2002), the "contact rate between the shaft member and the bearing member" means a proportion of a part in which the shaft member and the bearing member are in solid contact with each other in a total sliding area when these members slide with each other in a state in which the lubricating oil is not supplied, the "radius gap" means a value obtained by subtracting a radius of the shaft member from a radius of the bearing member, the "fluid lubrication state" means a state of fluid lubrication which is sorted using a Stribeck curve, the "eccentricity" means a value obtained by dividing, by the radius gap, an amount of eccentricity between a central axis of the shaft member and a central axis of the bearing member in a case in which a load is applied to the shaft member, the "hardness" means a Vickers hardness measured according to JIS-Z2244 (2009), and "during steady driving" means a point of time at which rotation of the shaft member is kept constant except for the start and end of the rotation of the shaft member.

In the present invention, the viscosity $\eta$ [Pa·sec] of the lubricating oil is calculated according to the following formula 7 by using a density $\rho$ [g/cm$^3$] of the lubricating oil and a kinematic viscosity $v(T)$ [mm$^2$/sec] at a temperature T [K] of the lubricating oil. It is known that the density $\rho$ of the lubricating oil depends on the temperature; however, its influence is small compared to a change in the kinematic viscosity $v$ due to the temperature dependence, as described later. Therefore, in the present invention, the density $\rho$ of the lubricating oil is defined to be a constant value at 15 °C to simplify the calculation.

$$\eta = \rho v(T) \times 10^{-3} \qquad 7$$

In the above formula 7, the kinematic viscosity $v(T)$ depends on the temperature T of the lubricating oil and is calculated according to the following formula 8 by using a viscosity-temperature characteristic number m.

$$v(T) = 10^{10^{(-m\log T + b)}} - 0.7 \qquad \cdot \cdot \cdot \; 8$$

In the above formula 8, the viscosity-temperature characteristic number m is calculated according to the following formula 9 shown in "Method of Estimating Kinematic Viscosity and Mixture Ratio" of JIS-K2283 (2000), by using a known kinematic viscosity $v_1$ of the lubricating oil at a temperature $T_1$ [K] and a known kinematic viscosity $v_2$ of the lubricating oil at a temperature $T_2$ [K] ($T_1 < T_2$). It is to be noted that values or the like written in the catalog may be used as the kinematic viscosity $v_1$ and the kinematic viscosity $v_2$.

$$m = \{\log\log(v_1 + 0.7) - \log\log(v_2 + 0.7)\} / (\log T_2 - \log T_1) \qquad 9$$

In the above formula 8, b is calculated according to the following formula 10 by using a known kinematic viscosity $v_3$ of the lubricating oil at a temperature $T_3$ [K]. It is to be noted that a value or the like written in the catalog may be used as the kinematic viscosity V3.

$$b = \log\log(\mu_3 + k) + m\log T_3 \qquad 10$$

In the present invention, an "oil film parameter" means a value of A calculated according to the following formula 11 in a case in which an oil film thickness is denoted by h [$\mu$m].

$$\Lambda = \frac{h}{\sqrt{Ra_1{}^2 + Ra_2{}^2}} \quad \cdots 11$$

Details of Embodiments of the Present Invention

Hereinafter, embodiments of the present invention are described in detail with reference to the drawings.

Sliding Member

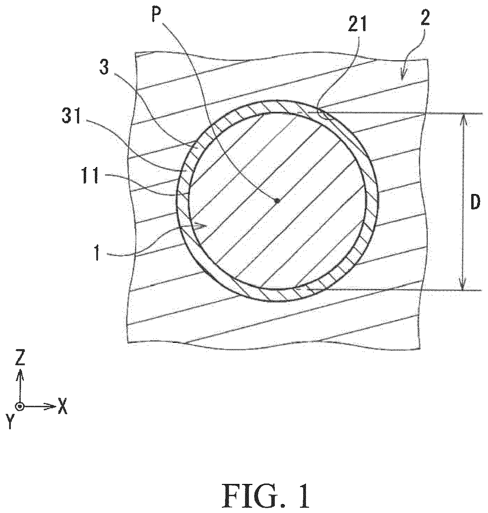

The sliding member in FIG. 1 includes: a shaft member 1 having a shaft diameter D of greater than or equal to 0.18 m; a bearing member 2 which slidably supports an outer peripheral face 11 of the shaft member 1; and a lubricating oil 3. A central axis P of the shaft member 1 extends in a horizontal direction (a Y direction in FIG. 1). An inner peripheral face 21 of the bearing member 2 surrounds the outer peripheral face 11 of the shaft member 1 along a circumferential direction. The lubricating oil 3 is supplied to a gap between the outer peripheral face 11 of the shaft member 1 and the inner peripheral face 21 of the bearing member 2. Furthermore, the lubricating oil 3 forms an oil film 31. The bearing member 2 slidably supports the shaft member 1 due to thus being disposed such that the inner peripheral face 21 faces the outer peripheral face 11 with the oil film 31 interposed therebetween. The arithmetic mean roughness $Ra_1$ of the outer peripheral face 11 of the shaft member 1 is less than or equal to 0.23 $\mu$m, and the protruding peak height $Rpk_1$ of the outer peripheral face 11 of the shaft member 1 is less than or equal to 0.19 $\mu$m. Furthermore, in a case in which a width of the inner peripheral face 21 of the bearing member 2 in an axial direction (the Y direction in FIG. 1) is denoted by L [m], a width-diameter ratio calculated as L/D is less than 1. Moreover, the parameter $C_n$ calculated according to the following formula 1, which represents a state of the oil film, is greater than or equal to the reference value $\gamma(\varepsilon_1)$ calculated based on the following formula 2.

$$C_n = \alpha \frac{\eta NDL^3}{4Wc^2} \quad \cdots 1$$

$$\gamma(\varepsilon) = \frac{3\left(1 - \varepsilon^2\right)^2}{\pi \varepsilon \sqrt{16\varepsilon^2 + \pi^2\left(1 - \varepsilon^2\right)}} \quad \cdots 2$$

In the above formula 1, $\alpha$ represents a contact rate between the shaft member 1 and the bearing member 2, $\eta$ represents a viscosity [Pa·sec] of the lubricating oil 3, N represents a rotation speed [rps] of the shaft member 1, W represents a maximum load [N] applied from the outer peripheral face 11 of the shaft member 1 to the inner peripheral face 21 of the bearing member 2, and c represents a radius gap [m] between the shaft member 1 and the bearing member 2; in the above formula 2, $\gamma(\varepsilon)$ represents a roughness parameter of the outer peripheral face 11 of the shaft member 1 and the inner peripheral face 21 of the bearing member 2, the roughness parameter being represented as a function of an eccentricity $\varepsilon$; and $\varepsilon_1$ represents a value calculated according to the following formula 3 in a case in which an arithmetic mean roughness of the inner peripheral face of the bearing member 2 is denoted by $Ra_2$ [$\mu$m] and a value of a minimum oil film parameter at which the oil film 31 maintains a fluid lubrication state is denoted by $\Lambda_{lim}$. It is to be noted that as the arithmetic mean roughness $Ra_1$ of the outer peripheral face 11 of the shaft member 1 and the arithmetic mean roughness $Ra_2$ of the inner peripheral face 21 of the bearing member 2, values before sliding between the shaft member 1 and the bearing member 2 may be used. As the rotation speed N, a rotation speed during steady driving at a time of driving the shaft member 1 may be applied. The value $\Lambda_{lim}$ may be set to greater than or equal to 2.0 and less than or equal to 4.0 in accordance with material properties of the shaft member 1 and the bearing member 2. In particular, in a case in which the surface roughness of each of the outer peripheral face 11 of the shaft member 1 and the inner peripheral face 21 of the bearing member 2 can be regarded as following a normal distribution, the value $\Lambda_{lim}$ of the minimum oil film parameter may be set to 3.0. Furthermore, in a case in which it is assumed that the oil film 31 can maintain the fluid lubrication state even with a value of less than 3.0, $\Lambda_{lim}$ may be also set to, for example, 2.5.

$$\varepsilon_1 = 1 - \frac{\Lambda_{lim}\sqrt{Ra_1^2 + Ra_2^2}}{c} \quad \cdots 3$$

The inner peripheral face 21 is subjected to a bearing pressure from the outer peripheral face 11 through the oil film 31. That is to say, the inner peripheral face 21 has a region which is subjected to the bearing pressure (bearing pressure distribution). The bearing pressure distribution extends, for example, in the axial direction (the Y direction in FIG. 1) of the inner peripheral face 21 and is formed in an arc shape along the inner peripheral face 21 in a section perpendicular to the central axis P. A range and a position of the bearing pressure distribution may fluctuate owing to a state of rotation and vibration of the shaft member 1. The maximum load W is calculated as a total bearing pressure in the bearing pressure distribution of the inner peripheral face 21.

The parameter $C_n$ is preferably less than the value $\gamma(\varepsilon_2)$ calculated based on the above formula 2 by using the eccentricity $\varepsilon_2$ calculated according to the following formula 4. The value $\gamma(\varepsilon_2)$ is calculated based on the eccentricity $\varepsilon_2$ in a sliding member which has a standard surface roughness and in which both the arithmetic mean roughness of the outer peripheral face of the shaft member and the arithmetic mean roughness of the inner peripheral face of the bearing member are 0.40 $\mu$m. Thus, the parameter $C_n$ being less than $\gamma(\varepsilon_2)$ enables controlling the parameter $C_n$ to be small. By controlling the parameter $C_n$ to be small, the friction loss between the outer peripheral face 11 and the inner peripheral face 21 can be further inhibited.

$$\varepsilon_2 = 1 - \frac{\sqrt{0.32}\,\Lambda_{lim}}{c} \quad \cdots 4$$

The parameter $C_n$ is more preferably less than a value $\gamma(\varepsilon_3)$ calculated based on the above formula 2 by using an eccentricity $\varepsilon_3$ calculated according to the following formula 12, and still more preferably less than a value $\gamma(\varepsilon_4)$ calculated based on the above formula 2 by using an eccentricity $\varepsilon_4$ calculated according to the following formula 13. The value $\gamma(\varepsilon_3)$ is calculated based on the eccentricity $\varepsilon_3$ in a sliding member in which both the arithmetic mean roughness of the outer peripheral face of the shaft member and the arithmetic mean roughness of the inner peripheral face of the bearing member are 0.35 $\mu$m, and the value $\gamma(\varepsilon_4)$ is calculated based on the eccentricity $\varepsilon_4$ in a sliding member in which both the arithmetic mean roughness of the outer peripheral face of the shaft member and the arithmetic mean roughness of the inner peripheral face of the bearing member are 0.30 $\mu$m.

$$\varepsilon_3 = 1 - \frac{\sqrt{0.245}\,\Lambda_{lim}}{c} \quad \cdots 12$$

$$\varepsilon_4 = 1 - \frac{\sqrt{0.18}\,\Lambda_{lim}}{c} \quad \cdots 13$$

Shaft Member

The shaft member 1 is a rotating body which rotates in the circumferential direction with respect to the bearing member 2. The shaft member 1 is exemplified by a crankshaft, an intermediate shaft, a propulsion shaft, and the like for a ship, each of which is to be disposed in a ship. Examples of a material of the shaft member 1 include carbon steel, low-alloy steel, an aluminum alloy, and the like.

It is preferred that a coating layer such as a lubricating film or the like is not formed on the outer peripheral face 11 of the shaft member 1. By thus not providing the coating layer on the outer peripheral face 11, mixture of impurities between the outer peripheral face 11 and the inner peripheral face 21 and an increase in cost can be inhibited.

The lower limit of the shaft diameter D of the shaft member 1 is 0.18 m as described above, may be 0.28 m, may be 0.33 m, and may be 0.36 m. When the coating layer is provided on the outer peripheral face 11 of the shaft member 1 and/or the like in a case in which the shaft diameter D of the shaft member 1 is greater than or equal to the lower limit value, there is a high possibility that the coating layer may be damaged, thereby generating impurities. On the other hand, the sliding member does not require the coating layer to be provided on the outer peripheral face 11;

therefore, mixture of impurities in the sliding area can be inhibited.

The upper limit of the shaft diameter D of the shaft member 1 is not particularly limited and is, for example, preferably 1.5 m, more preferably 1.3 m, and still more preferably 1.2 m. When the shaft diameter D of the shaft member 1 is greater than the upper limit value, there may be a possibility that the friction loss between the outer peripheral face 11 and the inner peripheral face 21 cannot be sufficiently inhibited.

The lower limit of the contact rate $\alpha$ is preferably 0.6, more preferably 0.7, and still more preferably 0.8. In the shaft member 1 having a large diameter, namely the shaft diameter D of greater than or equal to the lower limit value, it is difficult to sufficiently increase the contact rate between the shaft member and the bearing member only by mechanical processing. In this case, by manually polishing a contact part which comes in contact with the bearing member, with sandpaper or the like as finish processing, the contact rate $\alpha$ can be increased to be greater than or equal to the lower limit. A method for determining the contact part and the contact rate $\alpha$ is exemplified by a method of using a straight edge, a method of using a bearing model having a shell shape, and the like. The straight edge has a plane which extends in an axial direction of the shaft member. In this method, ink is applied to the plane, and then the plane is pressed against the outer peripheral face of the shaft member to transfer the ink thereonto. After that, the contact part is determined by a part onto which the ink has transferred, and the contact rate $\alpha$ is determined by a transfer rate of the ink. Meanwhile, the bearing model having a shell shape has an inner peripheral face which partly surrounds the outer peripheral face of the shaft member. In the method of using the bearing model, the contact part and the contact rate $\alpha$ are also determined in such a manner that, as in the method of using the straight edge, ink is applied to the inner peripheral face, and then the inner peripheral face is pressed against the outer peripheral face of the shaft member to transfer the ink thereonto. When the contact rate $\alpha$ is less than the lower limit, uniform contact between the outer peripheral face 11 of the shaft member 1 and the inner peripheral face 21 of the bearing member 2 may be difficult. As a result, the bearing pressure from the outer peripheral face 11 to the inner peripheral face 21 due to the maximum load W is likely to increase, and thus it may be difficult for the oil film 31 to maintain the fluid lubrication state.

On the outer peripheral face 11 of the shaft member 1, a plurality of roughness projection apices may be present, wherein the roughness projection apices are calculated by the following procedure. Firstly, based on a roughness curve with a measured length of 4.0 mm, the roughness curve being measured at a cut-off value of 0.25 mm according to JIS-B0601 (2013), an average line of the roughness curve is set according to JIS-B0601 (2013). With the average line as a reference, heights of measurement points above the average line are defined as positive values, while heights of measurement points below the average line are defined as negative values. An average value of the heights of all the measurement points having positive values is denoted by Thr0. Next, of the measurement points on the roughness curve, a measurement point which is higher than measurement points adjacent thereto on both sides and has a height of greater than -Thr0 is defined as a temporary apex. Of measurement points between temporary apices adjacent to each other, a measurement point having a smallest height (having a largest depth from the temporary apices adjacent to each other) is defined as a valley. Then, for all the temporary apices, height differences between a temporary apex and each of valleys adjacent to the temporary apex on both sides are respectively determined, and apices in which the larger value of these height differences is less than $0.2 \times$ Thr0 are excluded. As a result, remaining temporary apices are determined as roughness projection apices.

In a case in which the roughness projection apices are present on the outer peripheral face 11 of the shaft member 1, the lower limit of a radius of curvature $\beta$ of roughness projections on the outer peripheral face 11 may be 55 $\mu$m, and may be 58 $\mu$m. When the outer peripheral face 11 is manually polished as the above-mentioned finish processing, the radius of curvature $\beta$ of roughness projections is likely to increase. When the radius of curvature $\beta$ of roughness projections is large, seizure is likely to occur between the outer peripheral face 11 and the inner peripheral face 21. Even with such a configuration, the sliding member enables easy inhibition of seizure in the sliding area.

It is to be noted that the "radius of curvature of roughness projections" as referred to herein means a value calculated by the following procedure. Firstly, straight lines are drawn toward the roughness projection apex from all measurement points between the roughness projection apex and valleys adjacent to the roughness projection apex on both sides, and the measurement point for which the slope of the straight line is the largest is defined as an end of the roughness projection. The radius of curvature of each roughness projection is determined by -0.5/a, wherein a denotes a quadratic coefficient of a quadratic function obtained by approximating a roughness curve between both ends of each roughness projection by the method of least squares. A median of the radii of curvature of all the roughness projections on the roughness curve is determined as the radius of curvature of the roughness projections.

When the outer peripheral face 11 is manually polished as the above-mentioned finish processing, the shaft member 1 is likely to have a large radius of curvature $\beta$ of roughness projections. Furthermore, with regard to other roughness characteristics of the outer peripheral face 11, the degree of roughness also tends to increase. In this case, by polishing with sandpaper having a sufficiently large grit number, the arithmetic mean roughness $Ra_1$ of outer peripheral face 11 of the shaft member 1 can be reduced to less than or equal to 0.23 $\mu$m, and the protruding peak height $Rpk_1$ of the outer peripheral face 11 can be reduced to less than or equal to 0.19 $\mu$m. For example, by polishing with sandpaper having roughness of a grit number of greater than or equal to 200, the arithmetic mean roughness $Ra_1$ and the protruding

peak height $Rpk_1$ can be reduced to fall within the above ranges. The grit number of the sandpaper may be greater than 500, and may be greater than 600. It is to be noted that the arithmetic mean roughness $Ra_1$ of the outer peripheral face 11 of the shaft member 1 and the protruding peak height $Rpk_1$ of the outer peripheral face 11 may be values after the above-described polishing with the sandpaper and before sliding between the shaft member 1 and the bearing member 2.

The upper limit of the arithmetic mean roughness $Ra_1$ of the outer peripheral face 11 is 0.23 $\mu$m as described above, preferably 0.16 $\mu$m, more preferably 0.12 $\mu$m, and still more preferably 0.08 $\mu$m. When the arithmetic mean roughness $Ra_1$ of the outer peripheral face 11 is greater than the upper limit, it may be difficult for the oil film 31 to maintain the fluid lubrication state. The lower limit of the arithmetic mean roughness $Ra_1$ of the outer peripheral face 11 is not particularly limited and may be 0.01 $\mu$m. It is to be noted that as the arithmetic mean roughness $Ra_1$ of the outer peripheral face 11, a value before sliding between the shaft member 1 and the bearing member 2 may be used.

The upper limit of the protruding peak height $Rpk_1$ of the outer peripheral face 11 is 0.19 $\mu$m as described above, preferably 0.18 $\mu$m, more preferably 0.14 $\mu$m, and still more preferably 0.10 $\mu$m. When the protruding peak height $Rpk_1$ of the outer peripheral face 11 is greater than the upper limit, it may be difficult for the oil film 31 to maintain the fluid lubrication state. The lower limit of the protruding peak height $Rpk_1$ of the outer peripheral face 11 is not particularly limited and may be 0.01 $\mu$m. It is to be noted that as the protruding peak height $Rpk_1$ of the outer peripheral face 11, a value before sliding between the shaft member 1 and the bearing member 2 may be used.

Bearing Member

The bearing member 2 is exemplified by a crank bearing, an intermediate bearing, a propulsion bearing, and the like for a ship, each of which is to be disposed in a ship. Examples of a material of the bearing member 2 include white metal, an aluminum alloy, trimetal, kelmet, and the like.

It is preferred that a coating layer such as a lubricating film or the like is not formed on the inner peripheral face 21 of the bearing member 2. By thus not providing the coating layer on the inner peripheral face 21, mixture of impurities between the outer peripheral face 11 and the inner peripheral face 21 and an increase in cost can be inhibited.

The upper limit of the width L of the inner peripheral face 21 of the bearing member 2 in the axial direction is preferably 0.350 m, more preferably 0.300 m, and still more preferably 0.220 m. When the width L is greater than the upper limit, there may be a possibility that the friction loss between the outer peripheral face 11 and the inner peripheral face 21 cannot be sufficiently inhibited. Conversely, in light of securing strength of the bearing member 2, the lower limit of the width L may be, for example, 0.010 m.

The upper limit of the width-diameter ratio calculated as LID is less than 1 as described above, preferably 0.8, more preferably 0.6, and still more preferably 0.4. When the width-diameter ratio is greater than the upper limit, a calculated value of the parameter $C_n$ is less likely to be coincident with the state of the oil film 31, and thus there may be a possibility that the friction loss between the outer peripheral face 11 and the inner peripheral face 21 cannot be sufficiently inhibited. Conversely, in light of securing the strength of the bearing member 2, the lower limit of the width-diameter ratio may be, for example, 0.1.

The upper limit of the radius gap c is not particularly limited and may be, for example, $1.0 \times 10^{-3}$ m. In light of facilitating formation of the oil film, the lower limit of the radius gap c may be, for example, $1.0 \times 10^{-4}$ m.

The outer peripheral face 11 and the inner peripheral face 21 differ in hardness. In the sliding member, since the outer peripheral face 11 and the inner peripheral face 21 differ in hardness, in a case in which the outer peripheral face 11 comes into contact with the inner peripheral face 21, microscopic projections on a surface having a higher hardness of two sliding faces are likely to be maintained. On the other hand, of the outer peripheral face 11 and the inner peripheral face 21, a surface having a lower hardness is easily plastically deformed due to rotation contact between the sliding faces. Hence, of the outer peripheral face 11 and the inner peripheral face 21, the peripheral face having a lower hardness can be regarded as a surface having substantially the same level of roughness projections as the peripheral face having a higher hardness, or as a smooth surface having substantially no roughness projections. In other words, with regard to the peripheral face having a higher hardness, the peripheral face being one of the outer peripheral face 11 and the inner peripheral face 21, in the case in which the arithmetic mean roughness thereof is denoted by $Ra_h$ [$\mu$m], conversion may be performed such that $Ra_1 = Ra_2 = Ra_h$ is satisfied in the above formula 3; with regard to the peripheral face having a lower hardness, the peripheral face being the other of the outer peripheral face 11 and the inner peripheral face 21, the arithmetic mean roughness thereof may be converted to 0. By thus regarding, of the outer peripheral face 11 and the inner peripheral face 21, the sliding face having a lower hardness as a surface having the same level of roughness projections as the sliding face having a higher hardness, or as a smooth surface having no roughness projections, $\varepsilon_1$ in the above formula 3 can be calculated more easily.

The hardness $H_1$ [HV] of the shaft member 1 is preferably higher than the hardness $H_2$ [HV] of the bearing member 2. In general, since the hardness $H_2$ of the bearing member 2 is low, it is difficult to intentionally control the surface roughness of the inner peripheral face 21 by mechanical processing and/or the like. Even in such a case, by setting the hardness $H_1$ of the shaft member 1 to be higher than the hardness $H_2$ of the bearing member 2, the inner peripheral face 21 of the bearing member 2 can be polished owing to the sliding with the shaft member 1. As a result, the surface roughness of the inner peripheral face 21 of the bearing member 2 is reduced, and thus the frictional resistance and the seizure between the outer peripheral face 11 and the inner peripheral face 21 are easily inhibited. The lower limit of a ratio $(H_1/H_2)$ of the hardness $H_1$ of the shaft member 1 to the hardness $H_2$ of the bearing member 2 is preferably 4.1, more preferably 5.0, still more preferably 6.0, and particularly preferably 8.0. When the above ratio is less than the lower limit, it may be difficult to reduce the surface roughness of the inner peripheral face 21 by rotation of the shaft member 1. Conversely, the upper limit of the above ratio is not particularly limited and may be, for example, 20 in light of ease of selection of materials of the shaft member 1 and the bearing member 2, and the like.

Lubricating Oil

The lubricating oil 3 is exemplified by paraffin base oil and the like. By forming the oil film 31, the lubricating oil 3 facilitates maintaining the fluid lubrication state between the outer peripheral face 11 and the inner peripheral face 21.

The upper limit of the viscosity $\eta$ of the lubricating oil 3 is preferably $7.7 \times 10^{-3}$ Pa sec, more preferably $6.2 \times 10^{-3}$ Pa sec, and still more preferably $5.2 \times 10^{-3}$ Pa sec. When the viscosity $\eta$ is greater than the upper limit, there may be a possibility that the friction loss between the outer peripheral face 11 and the inner peripheral face 21 cannot be sufficiently inhibited. Conversely, in light of inhibiting the seizure between the outer peripheral face 11 and the inner peripheral face 21, the lower limit of the viscosity $\eta$ may be, for example, $1.0 \times 10^{-3}$ Pa·sec.

Advantages

Since the oil film 31 easily maintains the fluid lubrication state, the sliding member enables inhibition of the friction loss and the seizure between the outer peripheral face 11 and the inner peripheral face 21. Moreover, in the sliding member, since the viscosity $\eta$, the rotation speed N, the width L, and the shaft diameter D are easily controlled to be small, the friction loss is easily reduced under the condition under which the oil film 31 is in the fluid lubrication state.

Method for Driving Sliding Member

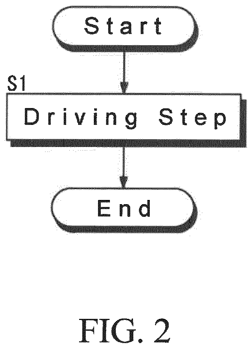

The method for driving a sliding member in FIG. 2 includes a driving step S1 of driving by using the sliding member in FIG. 1 to rotate the shaft member 1.

Driving Step

In the driving step S1, the shaft member 1 is rotated while the lubricating oil 3 is supplied to the gap between the shaft member 1 and the bearing member 2. A method for supplying the lubricating oil 3 is exemplified by a method in which a supply port for supplying the lubricating oil 3 is provided on the inner peripheral face 21 of the bearing member 2 and the lubricating oil 3 is supplied from the supply port such that the lubricating oil 3 circulates in the sliding area between the shaft member 1 and the bearing member 2.

During steady driving in the driving step S1, the parameter $C_n$ calculated according to the above formula 1, which represents the state of the oil film 31, is controlled to be greater than or equal to the reference value $\gamma(\varepsilon_1)$ calculated based on the above formula 2.

During steady driving in the driving step S1, the lower limit of the rotation speed N is preferably 0.30 rps and more preferably 0.56 rps. When the rotation speed N is less than the lower limit, it may be difficult for the oil film 31 to maintain the fluid lubrication state. The upper limit of the rotation speed N is preferably 30 rps and more preferably 20 rps. When the rotation speed N is greater than the upper limit, there may be a possibility that the friction loss between the outer peripheral face 11 and the inner peripheral face 21 cannot be sufficiently inhibited.

Advantages

According to the method for driving a sliding member, since the parameter $C_n$ is controlled to be greater than or equal to the reference value $\gamma(\varepsilon_1)$ during steady driving in the driving step S1, the friction loss and the seizure between the shaft member 1 and the bearing member 2 can be inhibited.

Other Embodiments

The above-described embodiments do not limit the configuration of the present invention which is defined in the appended claims.

In the above-described embodiments, the central axis of the shaft member extends in the horizontal direction;

however, the central axis of the shaft member may be inclined to the horizontal direction.

In the above-described embodiments, the outer peripheral face of the shaft member and the inner peripheral face of the bearing member differ in hardness; however, the hardness of the outer peripheral face may be substantially equal to that of the inner peripheral face. In this case, $\varepsilon_1$ is preferably calculated according to the above formula 3 by using the respective arithmetic mean roughnesses of the outer peripheral face and the inner peripheral face.

In the driving step of the above-described embodiment, the shaft member is rotated while the lubricating oil is supplied to the gap between the shaft member and the bearing member; however, the lubricating oil may be dropped into the gap before rotation of the shaft member. Furthermore, in the case in which the lubricating oil is dropped into the gap before rotation of the shaft member, it is not necessary for the lubricating oil to be dropped during rotation of the shaft member.

EXAMPLES

Hereinafter, the present invention is described in detail by way of Examples; the present invention should not be construed as being limited to description in the Examples.

In the Examples, a seizure test in which a condition under which seizure occurred was investigated, a polishing test in which the outer peripheral face of the shaft member was manually polished, and a sliding test in which the shaft member was rotated were performed.

Seizure Test

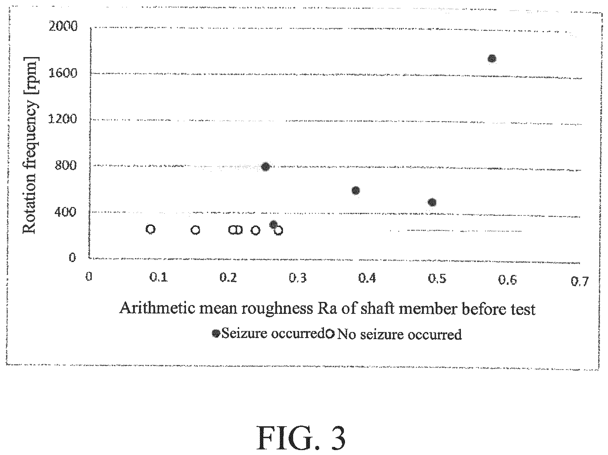

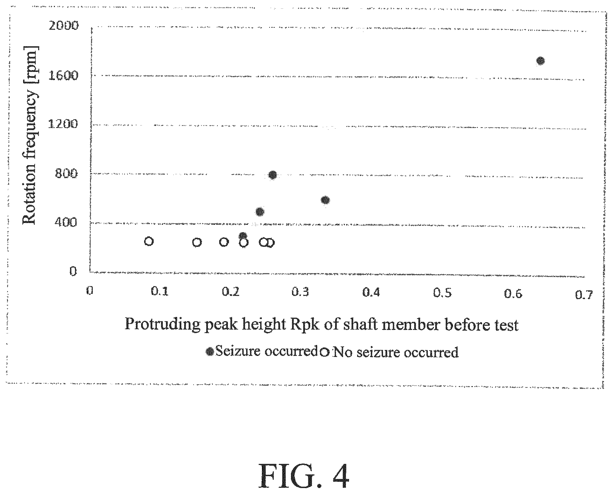

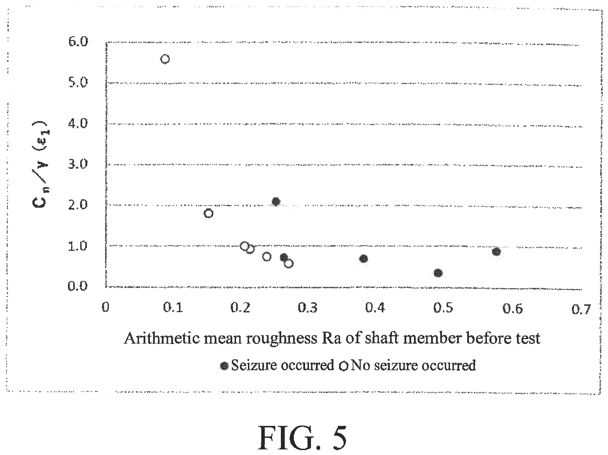

In the seizure test, shaft members having various degrees of roughness were rotated using a bearing lifetime tester available from Chihoda-Seiko Co., Ltd. As each of the shaft members, a shaft member with a manually polished outer peripheral face was used. Furthermore, the shaft member was rotated while the inner peripheral face of the bearing member which surrounded the entire periphery of the outer peripheral face of the shaft member was pressed against the shaft member with a constant load. The shaft diameter of the shaft member was 39.96 mm (tolerance: ±0.01 mm), an inner diameter of the bearing member was 40.20 mm (tolerance: +0.025 mm to +0.050 mm), and the width of the inner peripheral face of the bearing member in the axial direction was 35.00 mm. The load from the bearing member to the shaft member was set to 10 kN. The rotation speed of the shaft member was decreased in stages by 250 rpm at intervals of greater than or equal to 1 minute and less than or equal to 10 minutes from an initial rotation speed of 3,000 rpm to a minimum rotation speed of 250 rpm. The rotation of the shaft member was stopped at a time of occurrence of seizure between the outer peripheral face of the shaft member and the inner peripheral face of the bearing member. Manganese steel was used as the shaft member, and white metal of WJ1 as defined in JIS-H5401 (1958) was used as the bearing member. As the lubricating oil, "FBK oil RO32", available from ENEOS Corporation, was used. The lubricating oil was supplied to the sliding area between the outer peripheral face of the shaft member and the inner peripheral face of the bearing member at an initial temperature of 70 °C and was circulated while the sliding area was immersed in the lubricating oil. FIG. 3 shows a relationship between the arithmetic mean roughness Ra of the outer peripheral face of the shaft member and the rotation speed of the shaft member at the time of occurrence of the seizure, and FIG. 4 shows a relationship between the protruding peak height Rpk of the outer peripheral face of the shaft member and the rotation speed of the shaft member at the time of occurrence of the seizure. Moreover, FIG. 5 shows a relationship between the arithmetic mean roughness of the shaft member and $C_n/\gamma(\varepsilon_1)$ at the time of occurrence of the seizure. In FIGs. 3 to 5, each white circle means that no seizure occurred, while each black circle means that seizure occurred. Furthermore, $C_n$ in FIG. 5 was calculated according to the above formula 1, wherein the load W applied to the inner peripheral face of the bearing member was set to $1.0 \times 10^4$ N, the contact rate $\alpha$ was set to 1, and the rotation speed N of the shaft member was defined as a rotation frequency at the time when the rotation of the shaft member was stopped; $\gamma(\varepsilon_1)$ in FIG. 5 was calculated according to the above formula 2 based on $\varepsilon_1$ calculated according to the above formula 3, wherein the arithmetic mean roughness of the inner peripheral face of the bearing member was regarded to be coincident with the arithmetic mean roughness of the outer peripheral face of the shaft member, and $\Lambda_{lim}$ was set to 2.5. The contact rate $\alpha$ was regarded as 1, considering that the shaft member used for the test had an extremely small shaft diameter. It is to be noted that the arithmetic mean roughnesses Ra and the protruding peak heights Rpk of the outer peripheral face of the shaft member and the inner peripheral face of the bearing member were measured using a portable surface roughness measurement instrument ("SJ-310"), available from Mitutuyo Corporation.

As shown in FIG. 3, when the arithmetic mean roughness Ra of the shaft member is controlled to be less than or equal to 0.23 μm, seizure is less likely to occur. Furthermore, as shown in FIG. 4, when the protruding peak height Rpk of the shaft member is controlled to be less than or equal to 0.19 μm, seizure is less likely to occur. Accordingly, it is considered that by controlling the arithmetic mean roughness Ra of the shaft member to be less than or equal to 0.23 μm and the protruding peak height Rpk of the shaft member to be less than or equal to 0.19 μm, the sliding face easily maintains the fluid lubrication state.

Furthermore, as shown in FIG. 5, seizure is likely to occur in a case in which $C_n/\gamma(\varepsilon_1)$ is less than 1. Thus, it is considered that by satisfying a condition that the parameter $C_n$ calculated according to the above formula 1 is greater than or equal to the reference value $\gamma(\varepsilon_1)$ calculated according to the above formula 2, seizure is more easily inhibited.

Polishing Test

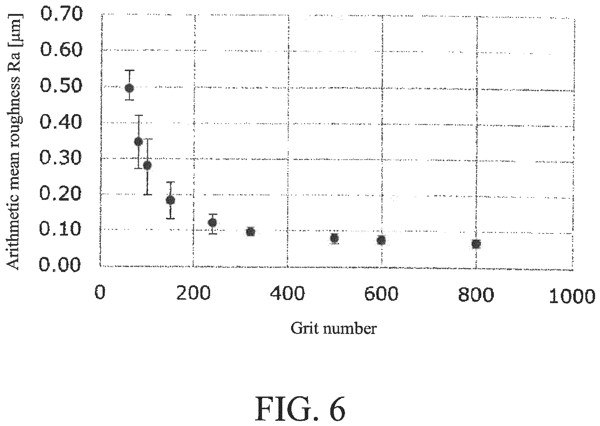

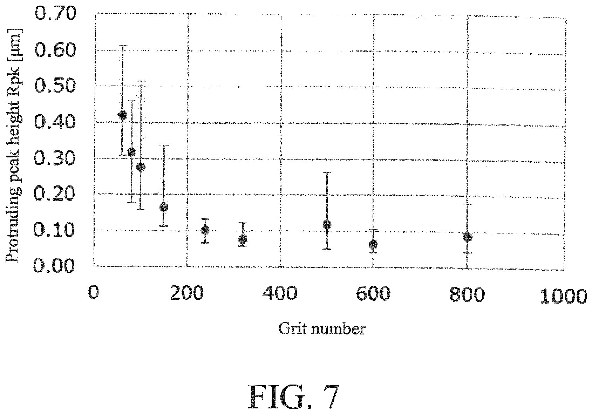

In the polishing test, the outer peripheral face of the shaft member was polished with sandpaper. As a material of the shaft member, steel corresponding to S45C as defined in JIS-G4051 (2016) was used. The shaft diameter of the shaft member in a part to be polished was set to 600 mm. The polishing was repeatedly performed while the grit number of the sandpaper was gradually increased. For each grit number of the sandpaper, the arithmetic mean roughness Ra and the protruding peak height Rpk of the outer peripheral face after the polishing were measured using the portable surface roughness measurement instrument ("SJ-310"), available from Mitutuyo Corporation. In this measurement, four circumferential positions were decided at intervals of 90 deg along the circumferential direction of the outer peripheral face, and for each of these circumferential positions, the arithmetic mean roughness Ra and the protruding peak height Rpk of the outer peripheral face were measured at two measurement points which differed in position in the axial direction. Furthermore, an evaluation length at each of the measurement points was set to 4 mm. FIG. 6 shows measurement results of the arithmetic mean roughness $Ra_1$, and FIG. 7 shows measurement results of the protruding peak height $Rpk_1$. It is to be noted that in FIGs. 6 and 7, each dot represents an average value, and a corresponding error bar represents an error range with respect to the average value.

As shown in FIG. 6, when the grit number of the sandpaper is greater than or equal to 200, the arithmetic mean roughness Ra is reduced to a range of less than or equal to 0.23 $\mu$m. Furthermore, as shown in FIG. 7, when the grit number of the sandpaper is greater than or equal to 200, the protruding peak height Rpk of the outer peripheral face of the shaft member tends to be reduced to a range of less than or equal to 0.19 $\mu$m. Moreover, when the grit number of the sandpaper is greater than 500, the protruding peak height Rpk of the outer peripheral face of the shaft member is reduced to the range of less than or equal to 0.19 $\mu$m. Accordingly, by setting the grit number of the sandpaper to be greater than or equal to 200, the degree of roughness of the outer peripheral face of the shaft member can be controlled to fall within a range in which seizure is less likely to occur in the above-described seizure test.

Sliding Test

In the sliding test, the shaft member was rotated under the following conditions of No. 1 to No. 20 by using an apparatus A (a frictional wear tester available from Chihoda-Seiko Co., Ltd.), an apparatus B (the bearing lifetime tester available from Chihoda-Seiko Co., Ltd.), and an apparatus C (a frictional wear tester available from KOBELCO MACHINERY ENGINEERING Co., Ltd.). As the shaft member, a shaft member with a manually polished outer peripheral face was used. In the apparatus A, the shaft member was rotated while the bearing member having a plate-like shape was pressed against the shaft member with a constant load. In the apparatus B and the apparatus C, the shaft member was rotated while the inner peripheral face of the bearing member which surrounded the entire periphery of the outer peripheral face of the shaft member was pressed against the shaft member with a constant load. The apparatus B was identical to the bearing lifetime tester used in the above-described seizure test. Furthermore, with regard to each of No. 1 to No. 20, the hardnesses of the shaft member and the bearing member as well as the arithmetic mean roughnesses and the protruding peak heights of the shaft member and the bearing member before and after the sliding test were measured. Table 1 shows measurement results of No. 1 to No. 20. It is to be noted that in Table 1, $Ra_{1A}$ denotes the arithmetic mean roughness of the shaft member before the sliding test, $Ra_{1B}$ denotes the arithmetic mean roughness of the shaft member after the sliding test, $Ra_{2A}$ denotes the arithmetic mean roughness of the bearing member before the sliding test, and $Ra_{2B}$ denotes the arithmetic mean roughness of the bearing member after the sliding test. Furthermore, in Table 1, $Rpk_{1A}$ denotes the protruding peak height of the shaft member before the sliding test, $Rpk_{1B}$ denotes the protruding peak height of the shaft member after the sliding test, $Rpk_{2A}$ denotes the protruding peak height of the bearing member before the sliding test, and $Rpk_{2B}$ denotes the protruding peak height of the bearing member after the sliding test. It is to be noted that in the sliding test, the hardness of the shaft member was measured using a Vickers hardness meter ("FV-310"), available from FUTURE-TECH CORP., and the hardness of the bearing member was measured using a Vickers hardness meter ("MVK-E"), available from Akashi Seisakusho, Ltd. Furthermore, the arithmetic mean roughness and the protruding peak height were measured using the portable surface roughness measurement instrument ("SJ-310"), available from Mitutuyo Corporation. Furthermore, in the measurement of the arithmetic mean roughness and the protruding peak height, the evaluation length was set to 4 mm.

No. 1 to No. 3

For No. 1 to No. 3, the load from the bearing member to the shaft member was set to 10 kN. The rotation speed of the shaft member was decreased in stages by 250 rpm at intervals of 10 minutes from the initial rotation speed of 3,000 rpm to the minimum rotation speed of 250 rpm. Manganese steel was used as the shaft member, and white metal of WJ1 as defined in JIS-H5401 (1958) was used as the bearing member. As the lubricating oil, "FBK oil RO32", available from ENEOS Corporation, was used. The lubricating oil was supplied to the sliding area between the outer peripheral face of the shaft member and the inner peripheral face of the bearing member at the initial temperature of 70 °C and was circulated while the sliding area was immersed in the lubricating oil.

No. 4 to No. 12

For No. 4 to No. 12, the rotation speed of the shaft member was set to a constant value of 3,500 rpm. The load from the bearing member to the shaft member was increased in stages by 0.5 kN at intervals of 5 minutes from an initial load of 0 kN to a maximum of 20 kN. Manganese steel was used as the shaft member, and white metal corresponding to WJ1 as defined in JIS-H5401 (1958) was used as the bearing member. As the lubricating oil, "FBK oil RO32", available from ENEOS Corporation, was used. The lubricating oil was supplied to the sliding area between the outer peripheral face of the shaft member and the inner peripheral face of the bearing member at the initial temperature of 70 °C and was circulated in the sliding area.

No. 13

For No. 13, the rotation speed of the shaft member was set to 400 rpm. The load from the bearing member to the shaft member was increased in stages by 0.1 kN at intervals of 1 minute from the initial load of 0 kN, to 1 kN. Steel of S45C as defined in JIS-G4051 (2016) was used as the shaft member, and white metal of WJ2 as defined in JIS-H5401 (1958) was used as the bearing member. As the lubricating oil, "FBK oil RO32", available from ENEOS Corporation, was used. The lubricating oil was supplied to the sliding area between the outer peripheral face of the shaft member and the inner peripheral face of the bearing member at room temperature and was circulated in the sliding area.

No. 14 and No. 17

For No. 14 and No. 17, the rotation speed of the shaft member and the load from the bearing member to the shaft member were kept at constant values of 50 rpm and 1 kN, respectively, and the shaft member was rotated for 240 minutes. A configuration and driving conditions of each of No. 14 and No. 17 were similar to those of No. 13 except for the rotation speed of the shaft member, the load, and the rotation time.

No. 15 and No. 18

For No. 15 and No. 18, the rotation speed of the shaft member and the load from the bearing member to the shaft member were kept at constant values of 100 rpm and 1 kN, respectively, and the shaft member was rotated for 240 minutes. Furthermore, the lubricating oil was only dropped once onto the sliding area between the outer peripheral face of the shaft member and the inner peripheral face of the bearing member at room temperature at the start of the sliding test. A configuration and driving conditions of each of No. 15 and No. 18 were similar to those of No. 13 except for the rotation speed of the shaft member, the load, the rotation time, and the method for supplying the lubricating oil.

No. 16

For No. 16, the rotation speed of the shaft member was set to 400 rpm. A configuration and driving conditions of No. 16 were similar to those of No. 13 except for the rotation speed of the shaft member.

No. 19 and No. 20

A configuration of each of No. 19 and No. 20 was similar to that of No. 1 to No. 3 except that nickel-chromium-molybdenum alloy steel was used as the shaft member. Furthermore, driving conditions of No. 19 and No. 20 were similar to those of No. 1 to No. 3 except that the rotation speed of the shaft member was decreased at intervals of 1 minute.

Table 1

| No. | Apparatus | Hardness [HV] | | Hardness ratio $H_1/H_2$ | Arithmetic mean roughness [μm] | | | | Protruding peak height [μm] | | | |
| --- | --- | --- | --- | --- | --- | --- | --- | --- | --- | --- | --- | --- |
| | | shaft member $H_1$ | bearing member $H_2$ | | shaft member | | bearing member | | shaft member | | bearing member | |
| | | | | | $Ra_{1A}$ before test | $Ra_{1B}$ after test | $Ra_{2A}$ before test | $Ra_{2B}$ after test | $Rpk_{1A}$ before test | $Rpk_{1B}$ after test | $Rpk_{2A}$ before test | $Rpk_{2B}$ after test |
| 1 | B | 212.8 | 24.9 | 8.5 | 0.09 | 0.09 | 0.96 | 0.46 | 0.08 | 0.10 | 2.29 | 0.27 |
| 2 | B | 212.8 | 24.9 | 8.5 | 0.21 | 0.20 | 0.92 | 0.18 | 0.19 | 0.19 | 2.19 | 0.17 |
| 3 | B | 212.8 | 24.9 | 8.5 | 0.58 | 0.52 | 0.91 | 0.38 | 0.64 | 0.48 | 2.16 | 0.68 |
| 4 | C | 194.5 | 21.7 | 9.0 | 0.42 | 0.41 | 0.39 | 0.25 | 0.47 | 0.41 | 0.42 | 0.62 |
| 5 | C | 194.5 | 21.7 | 9.0 | 0.42 | 0.41 | 0.39 | 0.24 | 0.29 | 0.27 | 0.42 | 0.27 |
| 6 | C | 194.5 | 21.7 | 9.0 | 0.45 | 0.44 | 0.39 | 0.13 | 0.35 | 0.36 | 0.42 | 0.18 |
| 7 | C | 194.5 | 21.7 | 9.0 | 0.27 | 0.27 | 0.39 | 0.20 | 0.20 | 0.29 | 0.42 | 0.36 |
| 8 | C | 194.5 | 21.7 | 9.0 | 0.16 | 0.16 | 0.39 | 0.31 | 0.13 | 0.15 | 0.42 | 0.45 |
| 9 | C | 194.5 | 21.7 | 9.0 | 0.08 | 0.11 | 0.39 | 0.23 | 0.08 | 0.12 | 0.42 | 0.30 |
| 10 | C | 194.5 | 21.7 | 9.0 | 0.07 | 0.08 | 0.39 | 0.24 | 0.08 | 0.09 | 0.42 | 0.29 |
| 11 | C | 194.5 | 21.7 | 9.0 | 0.31 | 0.32 | 0.39 | 0.23 | 0.13 | 0.21 | 0.42 | 0.20 |
| 12 | C | 194.5 | 21.7 | 9.0 | 0.04 | 0.09 | 0.39 | 0.22 | 0.06 | 0.09 | 0.42 | 0.26 |
| 13 | A | 159 | 29.7 | 5.4 | 0.22 | 0.22 | 1.81 | 0.09 | - | 0.21 | 1.23 | 0.11 |
| 14 | A | 150 | 29.7 | 5.1 | 0.30 | 0.28 | 1.83 | 0.08 | - | 0.36 | 0.48 | 0.11 |
| 15 | A | 151 | 29.7 | 5.1 | 0.34 | 0.34 | 1.67 | 0.49 | - | 0.28 | 0.61 | 0.57 |
| 16 | A | 119 | 29.7 | 4.0 | 0.22 | 0.22 | 1.77 | 0.29 | - | 0.24 | 0.42 | 0.99 |
| 17 | A | 119 | 29.7 | 4.0 | 0.23 | 0.23 | 1.85 | 0.11 | - | 0.27 | - | 0.13 |
| 18 | A | 119 | 29.7 | 4.0 | 0.37 | 0.33 | 1.59 | 1.24 | - | 0.28 | 0.40 | 0.96 |

(continued)

| shalt member $H_1$ | bearing member $H_2$ | $Ra_{1A}$ before test | $Ra_{1B}$ after test | $Ra_{2A}$ before test | shaft member | | bearing member | | shaft member | | bearing member | |
|---|---|---|---|---|---|---|---|---|---|---|---|---|
| | | | | | $Ra_{2B}$ after test | $Rpk_{1A}$ before test | $Rpk_{1B}$ after test | $Rpk_{2A}$ before test | $Rpk_{2B}$ after test | | | |
| 19 | B | 277 | 24.9 | 11.1 | 0.26 | 0.24 | 1.20 | 0.31 | 0.40 | 0.26 | 1.37 | 0.19 |
| 20 | B | 277 | 24.9 | 11.1 | 0.07 | 0.06 | 1.23 | 0.30 | 0.07 | 0.07 | 1.55 | 0.46 |

As shown in Table 1, the arithmetic mean roughness and the protruding peak height of the shaft member did not significantly change before and after the sliding test. On the other hand, the arithmetic mean roughness and the protruding peak height of the bearing member tended to decrease after the sliding test.

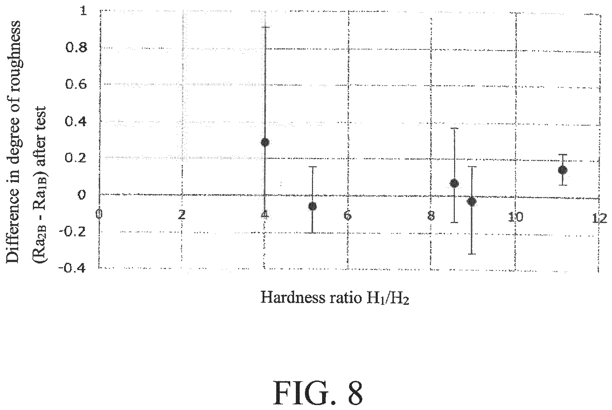

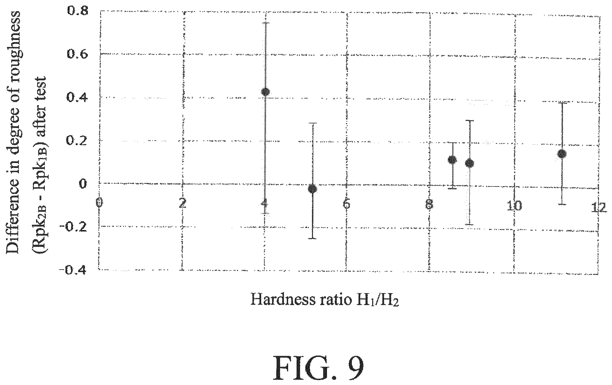

With regard to No. 1 to No. 20, FIG. 8 shows a graph in which the horizontal axis represents the ratio ($H_1/H_2$) of the hardness $H_1$ [HV] of the shaft member to the hardness $H_2$ [HV] of the bearing member, and the vertical axis represents a difference in arithmetic mean roughness $Ra_{2B} - Ra_{1B}$ after the sliding test. Furthermore, FIG. 9 shows a graph in which the horizontal axis represents $H_1/H_2$, and the vertical axis represents a difference in protruding peak height $Rpk_{2B} - Rpk_{1B}$. Furthermore, each dot in FIGs. 8 and 9 represents an average value, and a corresponding error bar represents an error range with respect to the average value. It is to be noted that with regard to No. 13 to No. 15, an average value of the values of $H_1/H_2$ was obtained, and is shown as the data in which the value of $H_1/H_2$ is 5.2.

It can be seen from FIGs. 8 and 9 that when the hardness ratio $H_1/H_2$ is greater than or equal to 4.1, the difference in arithmetic mean roughness $Ra_{2B} - Ra_{1B}$ and the difference in protruding peak height $Rpk_{2B} - Rpk_{1B}$ tend to approach 0. This indicates that by setting the hardness ratio $H_1/H_2$ to be greater than or equal to 4.1, the bearing member is polished, and consequently, the arithmetic mean roughness and the protruding peak height of the bearing member respectively approach the arithmetic mean roughness and the protruding peak height of the shaft member.

Moreover, it is shown below that the friction loss can be reduced by reducing the arithmetic mean roughnesses of the outer peripheral face of the shaft member and the inner peripheral face of the bearing member. In Table 2, sliding conditions of No. 21 to No. 32 were assumed. In Table 2, the sliding conditions of No. 21, No. 27, and No. 30 are equivalent to those of a conventional sliding member. Table 2 further shows, for each sliding condition, calculation values for the eccentricity $\varepsilon_1$, the eccentricity $\varepsilon_2$, a ratio of the parameter $C_n$ to the reference value $\gamma(\varepsilon_1)$, a ratio of the parameter $C_n$ to $\gamma(\varepsilon_2)$, a limit oil film thickness $h_{lim}$ [$\mu$m], and the friction coefficient $\mu$. Here, the parameter $C_n$ was calculated according to the above formula 1, the eccentricity $\varepsilon_1$ was calculated according to the above formula 3, the eccentricity $\varepsilon_2$ was calculated according to the above formula 4, the reference values $\gamma(\varepsilon_1)$ and $\gamma(\varepsilon_2)$ were calculated by applying the eccentricity $\varepsilon_1$ and the eccentricity $\varepsilon_2$ to the above formula 2, the limit oil film thickness $h_{lim}$, was calculated according to the following formula 14, and the friction coefficient $\mu$ was calculated according to the above formula 6. It is to be noted that in the calculation of $\varepsilon_1$ and $\varepsilon_2$ according to the above formulae 3 and 4, the oil film parameter $\Lambda_{lim}$ was set to 3.0. Furthermore, the "limit oil film thickness" as referred to herein means a minimum oil film thickness at which the oil film can maintain the fluid lubrication state.

$$h_{lim} = \Lambda_{lim} \sqrt{Ra_1^2 + Ra_2^2} \qquad \cdot \cdot \cdot 14$$

Table 2

| No. | Sliding conditions | | | | | | | | | contact rate $\alpha$ | Calculation results | | | | | |
|---|---|---|---|---|---|---|---|---|---|---|---|---|---|---|---|---|
| | shaft member $Ra_1$ [μm] | bearing member $Ra_2$ [μm] | radius gap c [m] | shaft diameter D [m] | bearing width L [m] | load W [N] | rotation speed N [rps] | lubricating oil viscosity $\eta$ [Pa·sec] | lubricating oil temperature T [°C] | | eccentricity $\varepsilon_1$ | eccentricity $\varepsilon_2$ | $C_n/\gamma$ ($\varepsilon_1$) | $C_n/\gamma$ ($\varepsilon_2$) | limit oil film thickness $h_{lim}$ [μm] | friction co-efficient $\mu$ |
| 21 | 0.40 | 0.40 | $3.5 \times 10^{-4}$ | 0.90 | 0.220 | $3.30 \times 10^6$ | 1.17 | $5.47 \times 10^{-3}$ | 150 | 0.6 | 0.995 | 0.995 | 1.01 | 1.01 | 1.70 | 0.099 |
| 22 | 0.40 | 0.40 | $3.5 \times 10^{-4}$ | 0.90 | 0.220 | $3.30 \times 10^6$ | 0.30 | $5.47 \times 10^{-3}$ | 150 | 0.6 | 0.995 | 0.995 | 0.26 | 0.26 | 1.70 | 0.025 |
| 23 | 0.20 | 0.20 | $3.5 \times 10^{-4}$ | 0.90 | 0.220 | $3.30 \times 10^6$ | 0.30 | $5.47 \times 10^{-3}$ | 150 | 0.6 | 0.998 | 0.995 | 1.04 | 0.26 | 0.85 | 0.036 |
| 24 | 0.20 | 0.20 | $3.5 \times 10^{-4}$ | 0.90 | 0.135 | $3.30 \times 10^6$ | 1.17 | $5.47 \times 10^{-3}$ | 150 | 0.7 | 0.998 | 0.995 | 1.09 | 0.27 | 0.85 | 0.086 |
| 25 | 0.20 | 0.20 | $3.5 \times 10^{-4}$ | 0.90 | 0.130 | $3.30 \times 10^6$ | 1.17 | $5.47 \times 10^{-3}$ | 150 | 0.8 | 0.998 | 0.995 | 1.11 | 0.28 | 0.85 | 0.083 |
| 26 | 0.20 | 0.20 | $3.5 \times 10^{-4}$ | 0.90 | 0.125 | $3.30 \times 10^6$ | 1.17 | $5.47 \times 10^{-3}$ | 150 | 0.9 | 0.998 | 0.995 | 1.11 | 0.28 | 0.85 | 0.079 |
| 27 | 0.40 | 0.40 | $3.5 \times 10^{-4}$ | 0.65 | 0.200 | $2.50 \times 10^6$ | 1.65 | $5.47 \times 10^{-3}$ | 150 | 0.6 | 0.995 | 0.995 | 1.02 | 1.02 | 1.70 | 0.088 |
| 28 | 0.40 | 0.40 | $3.5 \times 10^{-4}$ | 0.22 | 0.200 | $2.50 \times 10^6$ | 1.65 | $4.26 \times 10^{-3}$ | 150 | 0.6 | 0.995 | 0.995 | 0.27 | 0.27 | 1.70 | 0.008 |
| 29 | 0.20 | 0.20 | $3.5 \times 10^{-4}$ | 0.22 | 0.200 | $2.50 \times 10^6$ | 1.65 | $4.26 \times 10^{-3}$ | 150 | 0.6 | 0.998 | 0.995 | 1.08 | 0.27 | 0.85 | 0.011 |
| 30 | 0.40 | 0.40 | $3.5 \times 10^{-4}$ | 0.18 | 0.100 | $6.36 \times 10^5$ | 12.00 | $5.52 \times 10^{-3}$ | 170 | 0.6 | 0.995 | 0.995 | 1.02 | 1.02 | 1.70 | 0.097 |
| 31 | 0.40 | 0.40 | $3.5 \times 10^{-4}$ | 0.18 | 0.040 | $6.36 \times 10^5$ | 12.00 | $5.52 \times 10^{-3}$ | 170 | 0.6 | 0.995 | 0.995 | 0.07 | 0.07 | 1.70 | 0.039 |
| 32 | 0.10 | 0.10 | $3.5 \times 10^{-4}$ | 0.18 | 0.040 | $6.36 \times 10^5$ | 12.00 | $5.52 \times 10^{-3}$ | 170 | 0.6 | 0.999 | 0.995 | 1.05 | 0.07 | 0.42 | 0.077 |

No. 21 to No. 26

As shown in Table 2, the shaft diameter D of each of No. 21 to No. 26 is 0.90 m. Although the rotation speed N of No. 22 is controlled to be lower than that of the conventional sliding member (No. 21), the arithmetic mean roughnesses of the outer peripheral face of the shaft member and the inner peripheral face of the bearing member of No. 22 are both 0.40 $\mu$m, which are equal to those of No. 21. Accordingly, $C_n/\gamma(\varepsilon_1)$ of No. 22 is less than 1, and thus there may be a possibility that No. 22 cannot maintain the fluid lubrication state. On the other hand, No. 23 to No. 26, in which the arithmetic mean roughnesses of the outer peripheral face of the shaft member and the inner peripheral face of the bearing member are both reduced as compared with those of the conventional sliding member (No. 21), satisfy $C_n/\gamma(\varepsilon_1)$ being greater than or equal to 1. Accordingly, there is a high probability that No. 23 to No. 26 can maintain the fluid lubrication state. Furthermore, $C_n/\gamma(\varepsilon_2)$ being less than 1 is satisfied by: in No. 23, reducing the rotation speed; and in No. 24 to No. 26, reducing the width L (bearing width L) of the inner peripheral face of the bearing member in the axial direction and increasing the contact rate $\alpha$. Accordingly, the friction coefficient of each of No. 23 to No. 26 is reduced as compared with that of No. 21.

No. 27 to No. 29

As shown in Table 2, the bearing width L of each of No. 27 to No. 29 is 0.200 m. Although the shaft diameter D and the viscosity $\eta$ of the lubricating oil of No. 28 are controlled to be smaller than those of the conventional sliding member (No. 27), the arithmetic mean roughnesses of the outer peripheral face of the shaft member and the inner peripheral face of the bearing member of No. 28 are both 0.40 $\mu$m, being equal to those of No. 27. Accordingly, $C_n/\gamma(\varepsilon_1)$ of No. 28 is less than 1, and thus there may be a possibility that No. 28 cannot maintain the fluid lubrication state. On the other hand, No. 29, in which the arithmetic mean roughnesses of the outer peripheral face of the shaft member and the inner peripheral face of the bearing member are both reduced as compared with those of No. 27, satisfies $C_n/\gamma(\varepsilon_1)$ being greater than or equal to 1. Accordingly, there is a high probability that No. 29 can maintain the fluid lubrication state. Furthermore, $C_n/\gamma(\varepsilon_2)$ being less than 1 is satisfied in No. 29 by reducing the shaft diameter D and the viscosity $\eta$ of the lubricating oil. Accordingly, the friction coefficient of No. 29 is reduced as compared with that of No. 27.

No. 30 to No. 32

As shown in Table 2, the shaft diameter D of each of No. 30 to No. 32 is 0.18 m. Although the bearing width L of No. 31 is controlled to be smaller than that of the conventional sliding member (No. 30), the arithmetic mean roughnesses of the outer peripheral face of the shaft member and the inner peripheral face of the bearing member of No. 31 are both 0.40 $\mu$m, being equal to those of No. 30. Accordingly, $C_n/\gamma(\varepsilon_1)$ of No. 31 is less than 1, and thus there may be a possibility that No. 31 cannot maintain the fluid lubrication state. On the other hand, No. 32, in which the arithmetic mean roughnesses of the outer peripheral face of the shaft member and the inner peripheral face of the bearing member are both reduced as compared with those of No. 30, satisfies $C_n/\gamma(\varepsilon_1)$ being greater than or equal to 1. Accordingly, there is a high probability that No. 32 can maintain the fluid lubrication state. Furthermore, $C_n/\gamma(\varepsilon_2)$ being less than 1 is satisfied in No. 32 by reducing the bearing width L as compared with that of No. 30. Accordingly, the friction coefficient of No. 32 is reduced as compared with that of No. 30.

According to the comparison of No. 21 to No. 26, the comparison of No. 27 to No. 29, and the comparison of No. 30 to No. 32, a sliding member in which $\gamma(\varepsilon_1) \le C_n < \gamma(\varepsilon_2)$ is satisfied enables inhibition of the friction loss as compared with a conventional sliding member, while maintaining the fluid lubrication state.

INDUSTRIAL APPLICABILITY

The sliding member according to the one aspect of the present invention enables inhibition of the frictional resistance and the seizure between the shaft member and the bearing member and can be thus applied to, for example, a sliding member for a ship.

Explanation of the Reference Symbols

1 Shaft member
11 Outer peripheral face
2 Bearing member
21 Inner peripheral face

3 Lubricating oil
31 Oil film
D Shaft diameter
P Central axis

**Claims**

1. A sliding member comprising:

   a shaft member (1) having a shaft diameter D of greater than or equal to 0.18 m, wherein the shaft diameter D is the diameter of the outer peripheral face (11) of the shaft member;
   a bearing member (2) which slidably supports the outer peripheral face of the shaft member; and
   a lubricating oil which is supplied to a gap between the outer peripheral face of the shaft member and an inner peripheral face (21) of the bearing member (2) and forms an oil film in the gap, wherein
   the shaft member is a crankshaft, an intermediate shaft, or a propulsion shaft for a ship,
   an arithmetic mean roughness $Ra_1$ of the outer peripheral face of the shaft member is less than or equal to 0.23 $\mu$m, the arithmetic mean roughness $Ra_1$ being measured according to JIS-B0601 (2013) at a low-frequency cut-off value $\lambda c$ of 2.5 mm and a high-frequency cut-off value $\lambda s$ of 0.8 $\mu$m, and a protruding peak height $Rpk_1$ of the outer peripheral face of the shaft member is less than or equal to 0.19 $\mu$m, the protruding peak height $Rpk_1$ being a value measured according to JIS-B0671-2 (2002),
   in a case in which a width of the inner peripheral face of the bearing member in an axial direction is denoted by L [m], a width-diameter ratio calculated as L/D is less than 1, and
   a parameter $C_n$ calculated according to formula 1, which represents a state of the oil film, is greater than or equal to a reference value $\gamma(\varepsilon_1)$ calculated based on formula 2:

$$C_n = \alpha \frac{\eta N D L^3}{4 W c^2} \qquad \cdot \cdot \cdot \; 1$$

$$\gamma(\varepsilon) = \frac{3\left(1 - \varepsilon^2\right)^2}{\pi \varepsilon \sqrt{16 \varepsilon^2 + \pi^2 \left(1 - \varepsilon^2\right)}} \qquad \cdot \cdot \cdot \; 2$$

   wherein, in the formula 1, $\alpha$ represents a contact rate between the shaft member and the bearing member, the contact rate being determined as a proportion of a part in which the shaft member and the bearing member are in solid contact with each other in a total sliding area when the shaft member and the bearing member slide with each other in a state in which the lubricating oil is not supplied; $\eta$ represents a viscosity [Pa-sec] of the lubricating oil calculated based on formula 7 by using a density $\rho$ [g/cm$^3$] of the lubricating oil and a kinematic viscosity $v(T)$ [mm$^2$/sec] at a temperature T [K] of the lubricating oil; N represents a rotation speed [rps] of the shaft member, W represents a maximum load [N] applied from the outer peripheral face of the shaft member to the inner peripheral face of the bearing member, and c represents a radius gap [m] between the shaft member and the bearing member, the radius gap c being determined by subtracting a radius of the shaft member from a radius of the bearing member; in the formula 2, $\gamma(\varepsilon)$ represents a roughness parameter of the outer peripheral face of the shaft member and the inner peripheral face of the bearing member, the roughness parameter being represented as a function of an eccentricity $\varepsilon$ which represents a value determined by dividing, by the radius gap c, an amount of eccentricity between a central axis of the shaft member and a central axis of the bearing member in a case in which a load is applied to the shaft member; and $\varepsilon_1$ represents a value calculated according to formula 3 in a case in which an arithmetic mean roughness of the inner peripheral face of the bearing member is denoted by $Ra_2$ [$\mu$m], the arithmetic mean roughness $Ra_2$ being measured according to JIS-B0601 (2013) at a low-frequency cut-off value $\lambda c$ of 2.5 mm and a high-frequency cut-off value $\lambda s$ of 0.8 $\mu$m, a value of a minimum oil film parameter at which the oil film maintains a fluid lubrication state is denoted by $\Lambda_{lim}$, and the minimum oil film parameter $\Lambda_{lim}$ is 3.0,

$$\varepsilon_1 = 1 - \frac{\Lambda_{lim}\sqrt{Ra_1{}^2 + Ra_2{}^2}}{c} \qquad \cdots 3$$

$$\eta = \rho v(T) \times 10^{-3} \qquad 7.$$

2. The sliding member according to claim 1, wherein

the outer peripheral face of the shaft member and the inner peripheral face of the bearing member differ in hardness, the hardness being the Vickers hardness measured according to JIS-Z2244 (2009), and
with regard to a peripheral face having a higher hardness, the peripheral face being one of the outer peripheral face of the shaft member and the inner peripheral face of the bearing member, in a case in which an arithmetic mean roughness thereof is denoted by $Ra_h$ [$\mu$m], $Ra_1 = Ra_2 = Ra_h$ is satisfied in the formula 3.

3. The sliding member according to claim 1 or 2, wherein the contact rate $\alpha$ is greater than or equal to 0.6.

4. The sliding member according to claim 1 or 2, wherein the parameter $C_n$ is less than a value $\gamma(\varepsilon_2)$ calculated based on the formula 2 by using an eccentricity $\varepsilon_2$ calculated according to formula 4:

$$\varepsilon_2 = 1 - \frac{\sqrt{0.32}\,\Lambda_{lim}}{c} \qquad \cdots 4$$

5. A method for driving a sliding member comprising:

a shaft member (1) having a shaft diameter D of greater than or equal to 0.18 m, wherein the shaft diameter D is the diameter of the outer peripheral face (11) of the shaft member;
a bearing member (2) which slidably supports the outer peripheral face of the shaft member; and
a lubricating oil which is supplied to a gap between the outer peripheral face of the shaft member and an inner peripheral face (21) of the bearing member and forms an oil film in the gap,
the method comprising:

driving by using the sliding member to rotate the shaft member, wherein
the shaft member is a crankshaft, an intermediate shaft, or a propulsion shaft for a ship,
an arithmetic mean roughness $Ra_1$ of the outer peripheral face of the shaft member is less than or equal to 0.23 $\mu$m, the arithmetic mean roughness $Ra_1$ being measured according to JIS-B0601 (2013) at a low-frequency cut-off value $\lambda$c of 2.5 mm and a high-frequency cut-off value $\lambda$s of 0.8 $\mu$m, and a protruding peak height $Rpk_1$ of the outer peripheral face of the shaft member is less than or equal to 0.19 $\mu$m, the protruding peak height $Rpk_1$ being measured according to JIS-B0671-2 (2002),
in a case in which a width of the inner peripheral face of the bearing member in an axial direction is denoted by L [m], a width-diameter ratio calculated as L/D is less than 1, and
during steady driving in the driving, a parameter $C_n$ calculated according to formula 1, which represents a state of the oil film, is controlled to be greater than or equal to a reference value $\gamma(\varepsilon_1)$ calculated based on formula 2:

$$C_n = \alpha\frac{\eta NDL^3}{4Wc^2} \qquad \cdots 1$$

$$\gamma(\varepsilon) = \frac{3\left(1 - \varepsilon^2\right)^2}{\pi\varepsilon\sqrt{16\varepsilon^2 + \pi^2\left(1 - \varepsilon^2\right)}} \qquad \cdots 2$$

wherein, in the formula 1, $\alpha$ represents a contact rate between the shaft member and the bearing member, the contact rate being a proportion of a part in which the shaft member and the bearing member are in solid contact with each other in a total sliding area when the shaft member and the bearing member slide with each other in a state in which the lubricating oil is not supplied; $\eta$ represents a viscosity [Pa·sec] of the lubricating oil calculated based on formula 7 by using a density $\rho$ [g/cm$^3$] of the lubricating oil and a kinematic viscosity $v(T)$ [mm$^2$/sec] at a temperature T [K] of the lubricating oil; N represents a rotation speed [rps] of the shaft member, W represents a maximum load [N] applied from the outer peripheral face of the shaft member to the inner peripheral face of the bearing member, and c represents a radius gap [m] between the shaft member and the bearing member, the radius gap c being determined by subtracting a radius of the shaft member from a radius of the bearing member; in the formula 2, $\gamma(\varepsilon)$ represents a roughness parameter of the outer peripheral face of the shaft member and the inner peripheral face of the bearing member, the roughness parameter being represented as a function of an eccentricity $\varepsilon$ which represents a value determined by dividing, by the radius gap c, an amount of eccentricity between a central axis of the shaft member and a central axis of the bearing member in a case in which a load is applied to the shaft member; and $\varepsilon_1$ represents a value calculated according to formula 3 in a case in which an arithmetic mean roughness of the inner peripheral face of the bearing member is denoted by Ra$_2$ [$\mu$m], the arithmetic mean roughness Ra$_2$ being measured according to JIS-B0601 (2013) at a low-frequency cut-off value $\lambda$c of 2.5 mm and a high-frequency cut-off value $\lambda$s of 0.8 $\mu$m, a value of a minimum oil film parameter at which the oil film maintains a fluid lubrication state is denoted by $\Lambda_{lim}$, and the minimum oil film parameter $\Lambda_{lim}$ is 3.0,

$$\varepsilon_1 = 1 - \frac{\Lambda_{lim}\sqrt{Ra_1^2 + Ra_2^2}}{c} \qquad \cdots 3$$

$$\eta = \rho v(T) \times 10^{-3} \qquad 7.$$

**Patentansprüche**

1. Gleitelement, umfassend:

ein Wellenelement (1) mit einem Wellendurchmesser D von mehr als oder gleich 0,18 m, wobei der Wellendurchmesser D der Durchmesser der äußeren Umfangsfläche (11) des Wellenelements ist;
ein Lagerelement (2), das die äußere Umfangsfläche des Wellenelements gleitend trägt; und
ein Schmieröl, das einem Spalt zwischen der äußeren Umfangsfläche des Wellenelements und einer inneren Umfangsfläche (21) des Lagerelements (2) zugeführt ist und einen Ölfilm in dem Spalt bildet, wobei
das Wellenelement eine Kurbelwelle, eine Zwischenwelle oder eine Antriebswelle für ein Schiff ist,
ein arithmetisches Mittel der Rauheit Ra$_1$ der äußeren Umfangsfläche des Wellenelements kleiner oder gleich 0,23 $\mu$m ist, wobei das arithmetische Mittel der Rauheit Ra$_1$ gemäß JIS-B0601 (2013) bei einem Niederfrequenz-Grenzwert $\lambda$c von 2.5 mm und einem Hochfrequenz-Grenzwert $\lambda$s von 0,8 $\mu$m gemessen wird, und eine vorstehende Spitzenhöhe Rpk$_1$ der äußeren Umfangsfläche des Wellenelements kleiner oder gleich 0,19 $\mu$m ist, wobei die vorstehende Spitzenhöhe Rpk$_1$ ein nach JIS-B0671-2 (2002) gemessener Wert ist,
in einem Fall, in dem eine Breite der inneren Umfangsfläche des Lagerelements in einer axialen Richtung mit L [m] bezeichnet wird, ein Breiten-Durchmesser-Verhältnis, berechnet als L/D, kleiner als 1 ist, und
ein nach Formel 1 berechneter Parameter C$_n$, der einen Zustand des Ölfilms darstellt, größer oder gleich einem nach Formel 2 berechneten Referenzwert $\gamma(\varepsilon_1)$ ist:

$$C_n = \alpha \frac{\eta NDL^3}{4Wc^2} \qquad \cdots 1$$

$$\gamma(\varepsilon) = \frac{3\left(1 - \varepsilon^2\right)^2}{\pi\varepsilon\sqrt{16\varepsilon^2 + \pi^2\left(1 - \varepsilon^2\right)}} \qquad \cdots 2$$

wobei in der Formel 1 $\alpha$ eine Kontaktrate zwischen dem Wellenelement und dem Lagerelement darstellt, wobei die Kontaktrate als ein Anteil eines Teils bestimmt wird, in dem das Wellenelement und das Lagerelement in festem Kontakt miteinander in einer Gesamtgleitfläche sind, wenn das Wellenelement und das Lagerelement in einem Zustand, in dem das Schmieröl nicht zugeführt ist, miteinander gleiten; $\eta$ eine Viskosität [Pa·sec] des Schmieröls darstellt, die auf der Grundlage der Formel 7 unter Verwendung einer Dichte $\rho$ [g/cm$^3$] des Schmieröls und einer kinematischen Viskosität $v(T)$ [mm$^2$/sec] bei einer Temperatur T [K] des Schmieröls berechnet wird; N eine Drehgeschwindigkeit [rps] des Wellenelements darstellt, W eine maximale Last [N] darstellt, die von der äußeren Umfangsfläche des Wellenelements auf die innere Umfangsfläche des Lagerelements ausgeübt wird, und c einen Radiusabstand [m] zwischen dem Wellenelement und dem Lagerelement darstellt, wobei der Radiusabstand c durch Subtraktion eines Radius des Wellenelements von einem Radius des Lagerelements bestimmt wird; in der Formel 2 stellt $\gamma(\varepsilon)$ einen Rauheitsparameter der äußeren Umfangsfläche des Wellenelements und der inneren Umfangsfläche des Lagerelements dar, wobei der Rauheitsparameter als eine Funktion einer Exzentrizität $\varepsilon$ dargestellt wird, die einen Wert darstellt, der bestimmt wird, indem ein Betrag der Exzentrizität zwischen einer Mittelachse des Wellenelements und einer Mittelachse des Lagerelements in einem Fall, in dem eine Last auf das Wellenelement ausgeübt wird, durch den Radiusabstand c dividiert wird; und $\varepsilon_1$ einen Wert darstellt, der gemäß Formel 3 in einem Fall berechnet wird, in dem eine arithmetische mittlere Rauheit der inneren Umfangsfläche des Lagerelements mit Ra$_2$ [$\mu$m] bezeichnet wird, wobei die arithmetische mittlere Rauheit Ra$_2$ gemäß JIS-B0601 (2013) bei einem Niederfrequenz-Grenzwert $\lambda c$ von 2,5 mm und einem Hochfrequenz-Grenzwert $\lambda s$ von 0,8 $\mu$m gemessen wird, wobei ein Wert eines minimalen Ölfilmparameters, bei dem der Ölfilm einen flüssigen Schmierzustand beibehält, mit $\Lambda_{lim}$ bezeichnet wird, und der minimale Ölfilmparameter $\Lambda_{lim}$ 3,0 ist,

$$\varepsilon_1 = 1 - \frac{\Lambda_{lim}\sqrt{Ra_1^2 + Ra_2^2}}{c} \qquad \cdots 3$$

$$\eta = \rho v(T) \times 10^{-3} \qquad 7.$$

2. Gleitelement nach Anspruch 1, wobei

die äußere Umfangsfläche des Wellenelements und die innere Umfangsfläche des Lagerelements sich in der Härte unterscheiden, wobei die Härte die nach JIS-Z2244 (2009) gemessene Vickers-Härte ist, und in Bezug auf eine Umfangsfläche mit einer höheren Härte, wobei die Umfangsfläche eine der äußeren Umfangsfläche des Wellenelements und der inneren Umfangsfläche des Lagerelements ist, in einem Fall, in dem eine arithmetische mittlere Rauheit davon mit Ra$_h$ [$\mu$m] bezeichnet wird, Ra$_1$ = Ra$_2$ = Ra$_h$ in der Formel 3 erfüllt ist.

3. Gleitelement nach Anspruch 1 oder 2, wobei die Kontaktrate $\alpha$ größer als oder gleich 0,6 ist.

4. Gleitelement nach Anspruch 1 oder 2, wobei der Parameter C$_n$ kleiner ist als ein Wert $\gamma(\varepsilon_2)$, der auf der Grundlage der Formel 2 unter Verwendung einer nach Formel 4 berechneten Exzentrizität $\varepsilon_2$ berechnet wird:

$$\varepsilon_2 = 1 - \frac{\sqrt{0.32\,\Lambda_{\lim}}}{c} \qquad \cdots 4$$

5. Verfahren zum Antreiben eines Gleitelements, umfassend:

ein Wellenelement (1) mit einem Wellendurchmesser D von mehr als oder gleich 0,18 m, wobei der Wellendurchmesser D der Durchmesser der äußeren Umfangsfläche des Wellenelements ist;
ein Lagerelement (2), das die äußere Umfangsfläche (11) des Wellenelements gleitend trägt; und
ein Schmieröl, das einem Spalt zwischen der Außenumfangsfläche des Wellenelements und einer Innenumfangsfläche (21) des Lagerelements zugeführt ist und einen Ölfilm in dem Spalt bildet,
wobei das Verfahren umfasst:

das Antreiben unter Verwendung des Gleitelements zum Drehen des Wellenelements, wobei
das Wellenelement eine Kurbelwelle, eine Zwischenwelle oder eine Antriebswelle für ein Schiff ist,
ein arithmetischer Mittel der Rauheit $Ra_1$ der äußeren Umfangsfläche des Wellenelements weniger als oder gleich 0,23 $\mu$m ist, wobei das arithmetische Mittel der Rauheit $Ra_1$ gemäß JIS-B0601 (2013) bei einem Niederfrequenz-Grenzwert $\lambda c$ von 2,5 mm und einem Hochfrequenz-Grenzwert $\lambda s$ von 0,8 $\mu$m gemessen wird, und eine vorstehende Spitzenhöhe $Rpk_1$ der äußeren Umfangsfläche des Wellenelements kleiner oder gleich 0,19 $\mu$m ist, wobei die vorstehende Spitzenhöhe $Rpk_1$ gemäß JIS-B0671-2 (2002) gemessen wird,
in einem Fall, in dem eine Breite der inneren Umfangsfläche des Lagerelements in einer axialen Richtung mit L [m] bezeichnet wird, ein als L/D berechnetes Breiten-Durchmesser-Verhältnis kleiner als 1 ist, und während des gleichmäßigen Antriebs im Antrieb ein gemäß Formel 1 berechneter Parameter $C_n$, der einen Zustand des Ölfilms darstellt, so gesteuert wird, dass er größer oder gleich einem gemäß Formel 2 berechneten Referenzwert $\gamma(\varepsilon_1)$ ist:

$$C_n = \alpha \frac{\eta N D L^3}{4 W c^2} \qquad \cdots 1$$

$$\gamma(\varepsilon) = \frac{3\left(1-\varepsilon^2\right)^2}{\pi\varepsilon\sqrt{16\varepsilon^2 + \pi^2\left(1-\varepsilon^2\right)}} \qquad \cdots 2$$

wobei in der Formel 1 $\alpha$ eine Kontaktrate zwischen dem Wellenelement und dem Lagerelement darstellt, wobei die Kontaktrate ein Anteil eines Teils ist, in dem das Wellenelement und das Lagerelement in festem Kontakt miteinander in einer Gesamtgleitfläche sind, wenn das Wellenelement und das Lagerelement in einem Zustand, in dem das Schmieröl nicht zugeführt ist, miteinander gleiten; $\eta$ eine Viskosität [Pa·sec] des Schmieröls darstellt, die auf der Grundlage der Formel 7 unter Verwendung einer Dichte $\rho$ [g/cm$^3$] des Schmieröls und einer kinematischen Viskosität $v(T)$ [mm$^2$/sec] bei einer Temperatur T [K] des Schmieröls berechnet wird; N eine Drehgeschwindigkeit [rps] des Wellenelements darstellt, W eine maximale Last [N] darstellt, die von der äußeren Umfangsfläche des Wellenelements auf die innere Umfangsfläche des Lagerelements ausgeübt wird, und c einen Radiusabstand [m] zwischen dem Wellenelement und dem Lagerelement darstellt, wobei der Radiusabstand c durch Subtraktion eines Radius des Wellenelements von einem Radius des Lagerelements bestimmt wird; in der Formel 2 $\gamma(\varepsilon)$ einen Rauheitsparameter der äußeren Umfangsfläche des Wellenelements und der inneren Umfangsfläche des Lagerelements darstellt, wobei der Rauheitsparameter als eine Funktion einer Exzentrizität $\varepsilon$ dargestellt wird, die einen Wert darstellt, der bestimmt wird, indem ein Betrag der Exzentrizität zwischen einer Mittelachse des Wellenelements und einer Mittelachse des Lagerelements in einem Fall, in dem eine Last auf das Wellenelement ausgeübt wird, durch den Radiusabstand c dividiert wird; und $\varepsilon_1$ einen Wert darstellt, der gemäß Formel 3 in einem Fall berechnet wird, in dem eine arithmetische mittlere Rauheit der inneren Umfangsfläche des Lagerelements mit $Ra_2$ [$\mu$m] bezeichnet wird, wobei die arithmetische mittlere Rauheit $Ra_2$ gemäß JIS-B0601 (2013) bei

einem Niederfrequenz-Grenzwert $\lambda$c von 2,5 mm und einem Hochfrequenz-Grenzwert $\lambda$s von 0,8 $\mu$m gemessen wird, wobei ein Wert eines minimalen Ölfilmparameters, bei dem der Ölfilm einen flüssigen Schmierzustand beibehält, mit $\Lambda_{\text{lim}}$ bezeichnet wird und der nimimale Ölfilmparameter $\Lambda_{\text{lim}}$ 3,0 ist,

$$\varepsilon_1 = 1 - \frac{\Lambda_{\text{lim}}\sqrt{Ra_1^2 + Ra_2^2}}{c} \qquad \cdots 3$$

$$\eta = \rho\upsilon(T) \times 10^{-3} \qquad 7.$$

## Revendications

1. Élément coulissant comprenant :

un élément d'arbre (1) ayant un diamètre d'arbre D supérieur ou égal à 0,18 m, dans lequel le diamètre d'arbre D est le diamètre de la face périphérique externe (11) de l'élément d'arbre ;
un élément de palier (2) qui supporte à coulissement la face périphérique externe de l'élément d'arbre ; et
une huile lubrifiante qui est fournie à un espace entre la face périphérique externe de l'élément d'arbre et une face périphérique interne (21) de l'élément de palier (2), et forme un film d'huile dans l'espace, dans lequel l'élément d'arbre est un vilebrequin, un arbre intermédiaire ou un arbre de propulsion pour un navire,
une rugosité moyenne arithmétique $Ra_1$ de la face périphérique externe de l'élément d'arbre est inférieure ou égale à 0,23 $\mu$m, la rugosité moyenne arithmétique $Ra_1$ étant mesurée conformément à JIS-B0601 (2013) à une valeur de coupure de basse fréquence $\lambda$c de 2,5 mm et une valeur de coupure de haute fréquence $\lambda$s de 0,8 $\mu$m, et une hauteur de pic saillant $Rpk_1$ de la face périphérique externe de l'élément d'arbre est inférieure ou égale à 0,19 $\mu$m, la hauteur de pic saillant $Rpk_1$ étant une valeur mesurée conformément à JIS-B0671-2 (2002),
au cas où une largeur de la face périphérique interne de l'élément de palier dans une direction axiale est désignée par L [m], un rapport largeur-diamètre calculé en tant que L/D est inférieur à 1, et
un paramètre $C_n$ calculé conformément à la formule 1, qui représente un état du film d'huile, est supérieur ou égal à une valeur de référence $\gamma(\varepsilon_1)$ calculée en fonction de la formule 2 :

$$C_n = \alpha\frac{\eta ND L^3}{4Wc^2} \qquad \cdots 1$$

$$\gamma(\varepsilon) = \frac{3\left(1 - \varepsilon^2\right)^2}{\pi\varepsilon\sqrt{16\varepsilon^2 + \pi^2\left(1 - \varepsilon^2\right)}} \qquad \cdots 2$$

dans lesquelles, dans la formule 1, $\alpha$ représente un taux de contact entre l'élément d'arbre et l'élément de palier, le taux de contact étant déterminé en tant que proportion d'une partie dans laquelle l'élément d'arbre et l'élément de palier sont en contact solide l'un avec l'autre dans une zone coulissante totale lorsque l'élément d'arbre et l'élément de palier coulissent l'un avec l'autre dans un état dans lequel l'huile lubrifiante n'est pas fournie ; $\eta$ représente une viscosité [Pa·s] de l'huile lubrifiante calculée en fonction de la formule 7 en utilisant une densité $\rho$ [g/cm$^3$] de l'huile lubrifiante et une viscosité cinématique $\upsilon(T)$ [mm$^2$/s] à une température T [K] de l'huile lubrifiante ; N représente une vitesse de rotation [tours/min] de l'élément d'arbre, W représente une charge maximale [N] appliquée de la face périphérique externe de l'élément d'arbre à la face périphérique interne de l'élément de palier, et c représente un espace radial [m] entre l'élément d'arbre et l'élément de palier, l'espace radial c étant déterminé en soustrayant un rayon de l'élément d'arbre d'un rayon de l'élément de palier ;

dans la formule 2, $\gamma(\varepsilon)$ représente un paramètre de rugosité de la face périphérique externe de l'élément d'arbre et la face périphérique interne de l'élément de palier, le paramètre de rugosité étant représenté en fonction d'une excentricité $\varepsilon$ qui représente une valeur déterminée en divisant, par l'espace radial c, une quantité d'excentricité entre un axe central de l'élément d'arbre et un axe central de l'élément de palier au cas où une charge est appliquée à l'élément d'arbre ; et $\varepsilon_1$ représente une valeur calculée conformément à la formule 3 au cas où une rugosité moyenne arithmétique de la face périphérique interne de l'élément de palier est désignée par Ra$_2$ [$\mu$m], la rugosité moyenne arithmétique Ra$_2$ étant mesurée conformément à JIS-B0601 (2013) à une valeur de coupure de basse fréquence $\lambda$c de 2,5 mm et une valeur de coupure de haute fréquence $\lambda$s de 0,8 $\mu$m, une valeur d'un paramètre de film d'huile minimal auquel le film d'huile maintient un état de lubrification fluidique est désignée par Aiim et le paramètre de film d'huile minimal $\Lambda_{\text{lim}}$ est de 3,0,

$$\varepsilon_1 = 1 - \frac{\Lambda_{\text{lim}}\sqrt{Ra_1{}^2 + Ra_2{}^2}}{c} \qquad \cdot \cdot \cdot 3$$

$$\eta = \rho v(T) \times 10^{-3} \qquad 7.$$

2. Élément coulissant selon la revendication 1, dans lequel

la face périphérique externe de l'élément d'arbre et la face périphérique interne de l'élément de palier diffèrent en dureté, la dureté étant la dureté Vickers mesurée conformément à JIS-Z2244 (2009), et
en ce qui concerne une face périphérique ayant une dureté plus élevée, la face périphérique étant une de la face périphérique externe de l'élément d'arbre et la face périphérique interne de l'élément de palier, au cas où une rugosité moyenne arithmétique de celle-ci est désignée par Ra$_h$ [$\mu$m], Ra$_1$ = Ra$_2$ = Ra$_h$ est satisfaite dans la formule 3.

3. Élément coulissant selon la revendication 1 ou 2, dans lequel le taux de contact $\alpha$ est supérieur ou égal à 0,6.

4. Élément coulissant selon la revendication 1 ou 2, dans lequel le paramètre C$_n$ est inférieur à une valeur $\gamma(\varepsilon_2)$ calculée en fonction de la formule 2 en utilisant une excentricité $\varepsilon_2$ calculée conformément à la formule 4 :

$$\varepsilon_2 = 1 - \frac{\sqrt{0.32}\ \Lambda_{\text{lim}}}{c} \qquad \cdot \cdot \cdot 4$$

5. Procédé d'entraînement d'un élément coulissant comprenant :

un élément d'arbre (1) ayant un diamètre d'arbre D supérieur ou égal à 0,18 m, dans lequel le diamètre d'arbre D est le diamètre de la face périphérique externe (11) de l'élément d'arbre ;
un élément de palier (2) qui supporte à coulissement la face périphérique externe de l'élément d'arbre ; et
une huile lubrifiante qui est fournie à un espace entre la face périphérique externe de l'élément d'arbre et une face périphérique interne (21) de l'élément de palier, et forme un film d'huile dans l'espace,
le procédé comprenant :

entraîner en utilisant l'élément coulissant pour faire tourner l'élément d'arbre,
dans lequel
l'élément d'arbre est un vilebrequin, un arbre intermédiaire ou un arbre de propulsion pour un navire,
une rugosité moyenne arithmétique Ra$_1$ de la face périphérique externe de l'élément d'arbre est inférieure ou égale à 0,23 $\mu$m, la rugosité moyenne arithmétique Ra$_1$ étant mesurée conformément à JIS-B0601 (2013) à une valeur de coupure de basse fréquence $\lambda$c de 2,5 mm et une valeur de coupure de haute fréquence $\lambda$s de 0,8 $\mu$m, et une hauteur de pic saillant Rpk$_1$ de la face périphérique externe de l'élément d'arbre est inférieure ou égale à 0,19 $\mu$m, la hauteur de pic saillant $Rpk_1$ étant mesurée conformément à JIS-B0671-2 (2002), au cas où une largeur de la face périphérique interne de l'élément de palier dans une direction axiale est désignée par L [m], un rapport largeur-diamètre calculé en tant que L/D est inférieur à 1, et au cours d'un entraînement constant dans l'entraînement, un paramètre $C_n$ calculé conformément à la formule 1, qui représente un état du film d'huile, est commandé pour être supérieur ou égal à une valeur de référence $\gamma(\varepsilon_1)$ calculée en fonction de la formule 2 :

$$C_n = \alpha \frac{\eta NDL^3}{4Wc^2} \qquad \cdots \quad 1$$

$$\gamma(\varepsilon) = \frac{3\left(1 - \varepsilon^2\right)^2}{\pi \varepsilon \sqrt{16\varepsilon^2 + \pi^2\left(1 - \varepsilon^2\right)}} \qquad \cdots \quad 2$$

dans lesquelles, dans la formule 1, $\alpha$ représente un taux de contact entre l'élément d'arbre et l'élément de palier, le taux de contact étant une proportion d'une partie dans laquelle l'élément d'arbre et l'élément de palier sont en contact solide l'un avec l'autre dans une zone coulissante totale lorsque l'élément d'arbre et l'élément de palier coulissent l'un avec l'autre dans un état dans lequel l'huile lubrifiante n'est pas fournie ; $\eta$ représente une viscosité [Pa·s] de l'huile lubrifiante calculée en fonction de la formule 7 en utilisant une densité $\rho$ [g/cm$^3$] de l'huile lubrifiante et une viscosité cinématique $\upsilon(T)$ [mm$^2$/s] à une température T [K] de l'huile lubrifiante ; N représente une vitesse de rotation [tours/min] de l'élément d'arbre, W représente une charge maximale [N] appliquée de la face périphérique externe de l'élément d'arbre à la face périphérique interne de l'élément de palier, et c représente un espace radial [m] entre l'élément d'arbre et l'élément de palier, l'espace radial c étant déterminé en soustrayant un rayon de l'élément d'arbre d'un rayon de l'élément de palier ; dans la formule 2, $\gamma(\varepsilon)$ représente un paramètre de rugosité de la face périphérique externe de l'élément d'arbre et la face périphérique interne de l'élément de palier, le paramètre de rugosité étant représenté en fonction d'une excentricité $\varepsilon$ qui représente une valeur déterminée en divisant, par l'espace radial c, une quantité d'excentricité entre un axe central de l'élément d'arbre et un axe central de l'élément de palier au cas où une charge est appliquée à l'élément d'arbre ; et $\varepsilon_1$ représente une valeur calculée conformément à la formule 3 au cas où une rugosité moyenne arithmétique de la face périphérique interne de l'élément de palier est désignée par $Ra_2$ [$\mu$m], la rugosité moyenne arithmétique $Ra_2$ étant mesurée conformément à JIS-B0601 (2013) à une valeur de coupure de basse fréquence $\lambda c$ de 2,5 mm et une valeur de coupure de haute fréquence $\lambda s$ de 0,8 $\mu$m, une valeur d'un paramètre de film d'huile minimal auquel le film d'huile maintient un état de lubrification fluidique est désignée par $\Lambda_{lim}$ et le paramètre de film d'huile minimal $\Lambda_{lim}$ est de 3,0,

$$\varepsilon_1 = 1 - \frac{\Lambda_{lim}\sqrt{Ra_1^2 + Ra_2^2}}{c} \qquad \cdots \quad 3$$

$$\eta = \rho\upsilon(T) \times 10^{-3} \qquad 7.$$

FIG. 1

FIG. 2

FIG. 3

FIG. 4

FIG. 5

FIG. 6

FIG. 7

FIG. 8

FIG. 9

**REFERENCES CITED IN THE DESCRIPTION**

**Patent documents cited in the description**

- JP H8121485 A
- JP H7116958 A
- JP 2017161003 A